# EUROPÄISCHE PATENTSCHRIFT

(11) **EP 4 377 272 B1**
(45) Veröffentlichungstag und Bekanntmachung des Hinweises auf die Patenterteilung: **25.03.2026**
(21) Anmeldenummer: 22733437.2
(22) Anmeldetag: 15.06.2022
(51) Int. Cl.: C03B 18/00, C03B 11/06, C03B 11/07

(54) **VERFAHREN ZUM FORMEN EINES GLASGEGENSTANDS, INSBESONDERE EINES DREIDIMENSIONAL GEFORMTEN FLACHGLASGEGENSTANDS, SOWIE VORRICHTUNG ZUR DURCHFÜHRUNG DES VERFAHRENS**
METHOD FOR MOULDING A GLASS ITEM, IN PARTICULAR A THREE-DIMENSIONALLY MOULDED PLANAR GLASS ITEM, AND DEVICE FOR CARRYING OUT THE METHOD
PROCÉDÉ DE MOULAGE D'UN ARTICLE EN VERRE, EN PARTICULIER D'UN ARTICLE EN VERRE PLAT MOULÉ EN TROIS DIMENSIONS, ET DISPOSITIF POUR LA MISE EN OEUVRE DU PROCÉDÉ

(30) Priorität: 26.07.2021 DE 102021119253
(43) Veröffentlichungstag der Anmeldung: 05.06.2024
(73) Patentinhaber: FÜLLER GLASTECHNOLOGIE VERTRIEBS-GMBH, 94518 Spiegelau (DE)
(72) Erfinder: FÜLLER, Alexandra, 94127 Neuburg am Inn (DE); ALTENDORFER, Bernhard, 94065 Waldkirchen (DE)
(74) Vertreter: Meissner Bolte Partnerschaft mbB
(86) Internationale Anmeldenummer: PCT/EP2022/066385
(87) Internationale Veröffentlichungsnummer: WO 2023/006298

(56) Entgegenhaltungen:
- CN-A- 105 366 919
- JP-A- H0 733 449

## Beschreibung

Die Erfindung betrifft ein Verfahren zum Formen eines Glasgegenstands, insbesondere eines dreidimensional geformten Flachglasgegenstands, gemäß dem Oberbegriff von Patentanspruch 1 sowie eine Vorrichtung zum Herstellen eines solchen Glasgegenstands gemäß dem Oberbegriff von Patentanspruch 8

Verfahren zum Formen von Glasgegenständen, nämlich insbesondere dreidimensional geformten Flachglasgegenständen, wie beispielsweise Handy- oder Tablet-Abdeckscheiben oder Kfz-Scheiben sind seit geraumer Zeit bekannt und basieren zu allermeist darauf, dass ein Flachglas-Rohling entweder in die gewünschte Form gepresst und/oder in die gewünschte Form geschliffen wird. Beim Pressen wird hierbei ein Stempelwerkzeug mit einem Stempel und Gegenstempel verwendet, wobei der Stempel und der Gegenstempel jeweils komplementär, d. h. beispielsweise konkav und konvex, in der Form des herzustellenden dreidimensional geformten Flachglasgegenstands geformt sind.

Ein Problem bei diesem Herstellungsverfahren besteht darin, dass sowohl der Stempel als auch der Gegenstempel während des Pressvorgangs zwangsläufig in Kontakt mit dem zu pressenden Glasgegenstand kommen, was jedoch im Hinblick auf die Qualität der gepressten Glasoberfläche von Nachteil ist. Eine Optimierung der Qualität der Glasoberfläche kann zwar durch eine Verwendung bestimmter geeigneter Glaskontaktmaterialien an den Kontaktflächen der Presswerkzeuge verbessert werden; allerdings ist in der Regel immer noch eine Nachbearbeitung der jeweiligen Glasoberfläche notwendig, insbesondere dann, wenn eine hohe Qualität der jeweiligen gepressten Oberfläche benötigt wird.

Beim Formen und Umformen von Glas werden im Wesentlichen Guss- und Stahllegierungen eingesetzt, bzw. Chrombeschichtungen von Stahllegierungen, die jedoch beim Überschreiten einer Grenztemperatur Anhaftungen von Glas in Form von Kleben zur Folge haben. Die Formen werden daher so ausgelegt, dass deren Temperaturen in einem Temperaturbereich von unter 500°C gehalten werden, während die Umformung von Gläsern bei Viskositäten von 10 Pas bis 10⁶ Pas und somit in Temperaturbereichen von 800°C bis 1500°C ablaufen.

Der sich daraus ergebende Temperaturgradient von Glas und Glaskontaktwerkstoff hat auch einen Temperaturgradienten innerhalb des jeweils geformten Glasbauteils zur Folge. Der Formungsprozess ist daher durch die unterschiedliche Wärmeausdehnung von Glas und Glaskontaktwerkstoff in unterschiedlichen Temperaturbereichen zeitlich limitiert. Diese zeitliche Limitierung im Formungsprozess gemäß dem Stand der Technik soll u.a.
- eine Überhitzung der Form vermeiden, die die vom Glas eingebrachte Wärme nicht schnell genug abführen kann und sich über die kritische Klebetemperatur erhitzt;
- vermeiden, dass sich das Glas nicht mehr vom Werkzeug trennen lässt, weil eine schnellere Schrumpfung des Glases bei hohen Temperaturen dazu führt, dass das Glas auf das Formenbauteil, das für die Innenkontur des Werkstücks zuständig ist, d.h. auf konvexe Abschnitte des Stempels, aufschrumpft;
- vermeiden, dass das Glas keine ausreichende Homogenisierung der Temperaturgradienten innerhalb des Bauteils im Formungsprozess erreichen kann und Oberflächenrisse, Deformationen durch Verspannungen, entstehen, weil keine Wiedererwärmung der Oberfläche durch die im Inneren des Glases gespeicherte Infrarotstrahlung stattfinden kann.

Dies führt beim Stand der Technik in der Konsequenz zu einer äußerst komplexen schwierigen Prozessführung, die dennoch Nachteile bei der erhaltenen Glasqualität mit sich bringt.

Wie vorerwähnt, besteht eine weitere Möglichkeit zur Herstellung von dreidimensional geformten Flachglasgegenständen darin, einen Glasrohling solange abtragend zu schleifen, bis dieser Rohling die gewünschte dreidimensionale Form angenommen hat; allerdings ist auch dieses Verfahren nachteilig und insbesondere auch zeitaufwendig und darüber hinaus bei einer geforderten hohen Qualität der jeweiligen Glasoberfläche langwierig und schwierig durchzuführen.

Eine weitere Möglichkeit einen Glasgob zu formen ist in der JP H 07 33 449 A beschrieben, wobei ein Glasgob gemäß der JP H 07 33 449 A auf ein flüssiges Zinnbad aufgelegt, auf eine Umformtemperatur erhitzt und anschließend durch ein hydraulisches Anheben des Zinnbads einerseits als auch durch ein Absenken des Formenstempels andererseits in eine dreidimensionale Form gepresst wird. Nach der erfolgten Formgebung wird der Glasgob durch ein Einblasen eines Kühlgases abgekühlt und entformt. Gemäß der CN 105 366 919 A werden in ähnlicher Weise an einer Glasoberfläche feine Erhebungen ausgebildet. Der bei diesen beiden Verfahren angewandte Firmenstempel implementiert allerdings ebenfalls die oben beschriebenen Nachteile von aus dem Stand der Technik bekannten Verfahren.

Der Erfindung liegt die Aufgabe zugrunde ein alternatives Verfahren zum Formen, d.h. Herstellen, von dreidimensional geformten Flachglasgegenständen zur Verfügung zu stellen, das eine hochpräzise Herstellung von Flachglasgegenständen bei gleichzeitiger hoher Qualität der Glasoberfläche ermöglicht und eine etwaige Notwendigkeit einer Nachbearbeitung auf ein Minimum reduziert, sowie ferner eine Vorrichtung zur Durchführung eines solchen Verfahrens zur Verfügung zu stellen.

Diese Aufgabe wird durch ein Verfahren gemäß Patentanspruch 1 sowie durch eine Vorrichtung gemäß Patentanspruch 8.

Insbesondere wird diese Aufgabe durch ein Verfahren zum Formen eines Glasgegenstands, insbesondere eines dreidimensional geformten Flachglasgegenstands, gelöst, wobei folgende Schritte durchgeführt werden.
a) Anordnen eines Flächengebildes aus Glas, beispielsweise einer Flachglasscheibe mit homogener Dicke oder einer Flachglasscheibe mit inhomogener Dicke oder eines vorgeformten Flachglasscheibenrohlings oder flüssigem flächig verteilten Glas, zwischen einem Formenstempel und einer Metallschmelze, d.h. einer Schmelze aus flüssigem Metall, insbesondere einer Zinnschmelze;
b) Temperieren des Flächengebildes aus Glas auf eine Umformtemperatur des Glases, bei welcher das Glas eine Viskosität im Bereich von 10 Pas bis 10^{6,5} Pas, vorzugsweise im Bereich von 10 Pas bis 10⁴ Pas und besonders bevorzugt im Bereich von 10 Pas bis 10³ Pas, aufweist;
c) Formen des Flächengebildes aus Glas, indem der Formenstempel und eine Oberfläche der Metallschmelze aufeinander zu bewegt werden, so dass das Flächengebilde aus Glas einerseits von dem Formenstempel und andererseits von der Metallschmelze mit Druck beaufschlagt und durch die beidseitige Druckbeaufschlagung und/oder durch ein Ansaugen und Anschmiegen des Flächengebildes aus Glas an den Formenstempel geformt wird;
d) Abkühlen des geformten Flächengebildes aus Glas auf eine Handhabungstemperatur unterhalb der Umformtemperatur bei welcher das Glas eine Viskosität von ≥ 10⁷ Pas hat; und
e) Entformen des abgekühlten Flächengebildes,
wobei das entformte Flächengebilde im Rahmen einer Nachbehandlung auf beiden Seiten oberflächenkonditioniert wird, indem die zweite oberflächenzukonditionierende Seite, nämlich die Seite des geformten Flachglasgegenstands, die bislang noch nicht mit einem Metallbad in Kontakt gekommen ist, unter Wenden des Flächengebildes, mit dem Metallbad oder einem zweiten Metallbad in Kontakt gebracht wird.

Ein wesentlicher Punkt der Erfindung liegt darin, dass das erfindungsgemäße Verfahren als Pressverfahren ausgeführt wird, wobei allerdings lediglich ein Formenstempel in Form eines massiven, festen Formenstempels verwendet wird, während als Gegenstempel eine Metallschmelze aus flüssigem Metall verwendet wird. Als flüssiges Metall wird erfindungsgemäß bevorzugt flüssiges Zinn verwendet, da Zinn Glas gegenüber äußerst inert ist und eine Herstellung von Glasoberflächen mit sehr hoher Oberflächenqualität ermöglicht. Darüber hinaus kann ein Zinnbad mit flüssigem Zinn auf hohe Temperaturen erwärmt werden, die eine Formung von Glas ermöglichen.

Bei dem erfindungsgemäßen Verfahren wird ein Flächengebilde aus Glas in einen Formungsraum eingebracht, der zwischen einem Volumen oder Behälter zur Aufnahme einer Metallschmelze, wie beispielsweise einem Metallbad, und einem Formenstempel angeordnet ist. Anschließend wird das Flächengebilde aus Glas, d.h. der Glasrohling, auf eine Umformtemperatur temperiert.

In diesem Zusammenhang sei darauf hingewiesen, dass das Volumen oder der Behälter zur Aufnahme der Metallschmelze während des Einbringens des Flächengebildes aus Glas in den Formungsraum bereits mit der Metallschmelze gefüllt sein kann.

Gemäß einer alternativen Ausführungsform der Erfindung ist es jedoch auch möglich, dass die Metallschmelze erst nach einem Einbringen des Flächengebildes aus Glas in den Formungsraum in das für die Metallschmelze vorgesehene Volumen, respektive den für die Metallschmelze vorgesehenen Behälter, eingebracht wird.

Gemäß einer weiteren Ausführungsform ist es ferner möglich, dass sich während des Einbringens des Flächengebildes aus Glas zwar bereits Metallschmelze in dem Volumen respektive Behälter für die Glasschmelze befindet, anschließend jedoch ein Niveauausgleich der Oberfläche der Metallschmelze erfolgt. Hierbei ist es möglich, das Niveau der Metallschmelze, beispielsweise durch ein Anheben des Metallbads und/oder durch eine weitere Zugabe von Metallschmelze, zu erhöhen oder, nach Bedarf, beispielsweise durch eine Entnahme von Metallschmelze aus dem Volumen oder Behälter, auch abzusenken.

Als Umformtemperatur des Glases wird im Rahmen der Erfindung eine Temperatur verstanden, bei welcher das jeweils zu formende Glas eine Viskosität im Bereich von 10 Pas bis 10^{6,5} Pas, vorzugsweise im Bereich von 10 Pas bis 10⁴ Pas und besonders bevorzugt im Bereich von 10 Pas bis 10³ Pas aufweist. In vorteilhafter Weise kann ein Glasrohling aus Flachglas mit einer solchen Viskosität, die in dem angegebenen Bereich liegt, in eine gewünschte dreidimensionale Form gebracht werden, um in erfindungsgemäßer Weise einen dreidimensional geformten Flachglasgegenstand herzustellen.

Nachdem der Glasrohling, d. h. das Flächengebilde aus Glas, auf die Umformtemperatur des Glases gebracht worden ist, werden der Formenstempel und die Metallschmelze aufeinander zu bewegt, so dass durch die Druckbeaufschlagung des Glasrohlings eine dreidimensionale Formung des Flächengebildes aus Glas zu dem gewünschten dreidimensional geformten Glasgegenstand erfolgt.

Als Ausgangsglaskörper respektive als Ausgangsflächengebilde kann erfindungsgemäß ein vorgefertigter Glasrohling verwendet werden, der als Flachglasscheibe mit homogener Dicke oder, je nach gewünschtem zu formenden dreidimensionalen Glasgegenstand, auch inhomogener Dicke oder bereits vorgeformter Flachglasscheibenrohling ausgebildet ist.

Des Weiteren ist es erfindungsgemäß auch möglich, als Ausgangsglas flüssiges Glas zu verwenden, das zwischen den Formenstempel und die Metallschmelze eingebracht und anschließend bei einem Aufeinanderzubewegen von Formenstempel und Metallschmelze geformt wird.

Die tatsächliche Formung des Glasrohlings zu dem gewünschten dreidimensional geformten Flachglasgegenstand erfolgt gemäß einer Ausführungsform der Erfindung dadurch, dass sich eine dreidimensionale Formenkontur des Formenstempels im Zuge eines Zusammenfahrens von Formenstempel und Metallschmelze in den erweichten Flachglasrohling eindrückt, wodurch der Flachglasrohling mit seiner dem Formenstempel abgewandten Seite seinerseits in die als Gegenstempel dienende Metallschmelze eingedrückt wird.

Hierbei dient die Metallschmelze erfindungsgemäß als Gegenstempel zu dem Formenstempel, wobei sich die Metallschmelze an den erweichten Flachglasrohling anschmiegt und den erweichten Flachglasrohling ihrerseits im Zusammenspiel ihrer Oberflächenspannung und ihres hydraulischen Drucks homogen und gleichmäßig an die dreidimensionale Formenkontur des Formenstempels anpresst.

Das Aufeinanderzubewegen von Formenstempel und Metallschmelze kann auf unterschiedliche Weise erfolgen.

Gemäß einer Ausführungsform der Erfindung befindet sich die Metallschmelze vorzugsweise unterhalb des Formenstempels, wobei bei einem Aufeinanderzubewegen von Metallschmelze und Formenstempel sowohl das Niveau der Metallschmelze angehoben als auch, gegebenenfalls gleichzeitig, der Formenstempel abgesenkt werden kann.

Um bei einem Zusammenfahren von Metallschmelze und Formenstempel, respektive beim Formen des gewünschten dreidimensional geformten Flachglasgegenstands, zu vermeiden, dass der Formenstempel, respektive der von dem Formenstempel geführte erweichte Flachglasgegenstand, zu weit in die Metallschmelze eingefahren respektive eingedrückt wird, wird zum einen sowohl der sich während des Formungsvorgangs aufbauende Druck exakt überwacht als auch die Zusammenfahrbewegung von Metallbad einerseits und Formenstempel andererseits exakt gesteuert. Darüber hinaus wird der Formenstempel nach Wunsch innerhalb einer den Formenstempel exakt umgebenden und den Formenstempel führenden Führung bewegt, wobei die Führung ein sich seitlich des Formenstempels befindliches Volumen, insbesondere dichtend, verschließt, so dass das Niveau der Metallschmelze während eines Eintauchens von Flachglasgegenstand und Formenstempel in die Metallschmelze bis maximal an eine untere Oberfläche der Führung ansteigen kann. Ein weiteres Eintauchen des Formenstempels, respektive des von dem Formenstempel geführten erweichten Flachglasgegenstands, in die Metallschmelze würde zu einem sofortigen gut messbaren Druckanstieg am Formenstempel und der Führung einerseits und dem Metallbad andererseits führen.

In gleicher Weise erfolgt ebenfalls ein Druckanstieg, wenn der erweichte Flachglasgegenstand über seine gesamte Oberfläche homogen an die Formenkontur des Formenstempels angedrückt ist und an dieser anliegt. Da in diesem Zustand keine weitere Verformung des Flachglasgegenstands mehr erfolgen kann, äußert sich ein weiteres Aufeinanderzubewegen von Metallschmelze und Formenstempel in einer deutlich messbaren Druckerhöhung, die das Ende des Formungsvorgangs signalisiert.

Da der sich in der Metallschmelze während des Pressvorgangs aufbauende Druck in der gesamten Metallschmelze homogen ist, erfolgt durch das erfindungsgemäße Verfahren eine über die gesamte Fläche des Flachglasrohlings homogene Anpressung des weichen Flachglasrohlings an die dreidimensionale Formenkontur des Formenstempels, so dass etwaige Spannungen in dem fertig geformten Flachglasgegenstand, wie sie bei herkömmlichen Glaspressen auftreten, bei dem erfindungsgemäßen Verfahren vermieden werden können.

Gemäß einer alternativen Ausführungsform der Erfindung kann der Formenstempel Öffnungen aufweisen, mittels derer, je nach Wunsch und Betriebszustand, entweder ein Überdruck oder ein Unterdruck auf den sich im Rahmen eines Formungsvorgangs benachbart zu dem Formenstempel befindlichen Flächenkörper aus Glas angewandt werden kann.

Mittels eines solchen Formenstempels, der Öffnungen zum Anwenden eines Unterdrucks auf den Flächenkörper aus Glas aufweist, kann eine Formung des Flächenkörpers aus Glas erfindungsgemäß auch dadurch erfolgen, dass sich das Metallbad einerseits sowie der Formenstempel andererseits einander annähern, wobei ein über den Formenstempel angelegter Unterdruck den Flächenkörper aus Glas ansaugt, sobald eine in Abhängigkeit des angelegten Unterdrucks definierte Entfernung des Flächenkörpers aus Glas gegenüber dem Formenstempel unterschritten ist.

Sobald sich der Flächenkörper aus Glas und der Formenstempel somit einander genügend nahegekommen sind, kann erfindungsgemäß eine Formung des auf die Umformtemperatur temperierten Flächenkörpers aus Glas dadurch erfolgen, dass der Formenstempel den temperierten Flächenkörper aus Glas ansaugt, wobei sich der temperierte Flächenkörper aus Glas exakt an die durch den Formenstempel vorgegebene Kontur des Formenstempels anschmiegt.

Bei einem solchen erfindungsgemäßen Formungsvorgang ist es möglich, dass der temperierte Flächenkörper aus Glas durch den von dem Formenstempel ausgeübten Sog von der Oberfläche des Metallbads abgehoben wird. Ein damit verbundener Vorteil besteht erfindungsgemäß darin, dass das zunächst auf der flüssigen Metalloberfläche aufliegende Flächengebilde aus Glas durch ein derartiges Abheben von der heißen, im Wesentlichen auf Umformtemperatur befindlichen flüssigen Metalloberfläche entfernt wird und durch den Kontakt mit dem kühleren Formenstempel unmittelbar oder zumindest sehr schnell, nachdem sich das Glas aufgrund des von dem Formenstempel ausgehenden Unterdrucks an diesen angeschmiegt hat, abkühlt und in der durch den Formenstempel gewünschten vorgegebenen Form erstarrt. Die Abkühlung des Glases bis auf eine Viskosität, bei welcher der Flächenkörper aus Glas ausreichend formstabil ist, damit dieser zur weiteren Behandlung handhabbar ist, erfolgt aufgrund eines Kontakts des sich zunächst auf Umformtemperatur befindlichen Flächenkörpers aus Glas mit dem kühleren Formenstempel, welcher im Zuge des Kontakts mit dem Flächenkörper aus Glas die Wärme des Flächenkörpers aus Glas abführt. Da der Formenstempel aus Glas erfindungsgemäß auf eine Temperatur temperiert ist, die zwar eine Formung des Flächenkörpers aus Glas erlaubt, jedoch ausreichend gering ist, dass ein Kleben des Flächenkörpers aus Glas an dem Formenstempel nicht stattfindet, kann der geformte Flächenkörper aus Glas, insbesondere unverzüglich, nach dessen Formung von dem Formenstempel gelöst und/oder entfernt werden.

Gemäß einer weiteren alternativen Ausführungsform der Erfindung kann das Niveau des flüssigen Metallbads erfindungsgemäß während eines Ansaugvorgangs des auf Umformtemperatur temperierten Flächenkörpers aus Glas durch den Formenstempel weiter angehoben werden, was entweder dadurch möglich ist, dass das Metallbad an sich angehoben wird, oder dadurch realisiert sein kann, dass lediglich das Oberflächenniveau des flüssigen Metalls in dem Bad durch eine weitere Zugabe von flüssigem Metall erhöht wird. Eine derartige Erhöhung des flüssigen Metallspiegels kann so lange fortgesetzt werden, bis der Flächenkörper aus Glas einerseits an dem Formenstempel anliegt und andererseits durch das flüssige Metall an den Formenstempel angedrückt wird. Eine derartige Ausführungsform hat den Vorteil, dass der zunächst auf Umformtemperatur temperierte Flächenkörper aus Glas durch eine Temperaturführung des Metallbads, während derer das Metallbad erfindungsgemäß vollständig flüssig bleibt, gezielt weiter erwärmt oder abgekühlt werden kann.

Eine weitere Erwärmung oder eine anhaltende Temperierung des Flächenkörpers aus Glas auf zumindest die Umformtemperatur, respektive die je nach Glastyp damit verbundene Viskosität des Flächenkörpers aus Glas, ist erfindungsgemäß beispielsweise dann besonders vorteilhaft, wenn der Flächenkörper aus Glas in Formen mit Hinterschneidungen eingeformt werden soll. In einem derartigen Fall wird erfindungsgemäß ein mehrteiliger Formenstempel verwendet, der es ermöglicht, das fertig geformte und auf Handhabungstemperatur abgekühlte Glas zerstörungsfrei zu entformen.

In jedem Fall kann der sich in Anlage mit dem Formenstempel befindliche Flächenkörper aus Glas auch und insbesondere aufgrund seines Kontakts mit dem flüssigen Metall gezielt und temperaturgeführt abgekühlt werden, indem das flüssige Metall selbst abgekühlt wird und dadurch dem Flächenkörper aus Glas gezielt Wärme entzieht.

Zum Entformen des geformten und auf Handhabungstemperatur abgekühlten Flächenkörpers aus Glas kann durch die sich in dem Formenstempel befindlichen Öffnungen auch ein Überdruck angelegt werden, durch welchen eine Ablösung des abgekühlten Flächenkörpers aus Glas von dem Formenstempel bewirkt und/oder erleichtert wird.

Ein Einbringen des Glasrohlings in einen Formungsraum kann erfindungsgemäß entweder mittels einer Haltevorrichtung und/oder einer Tragvorrichtung für das Flächengebilde aus Glas erfolgen, die beispielsweise in Form eines Greifers oder einer Lanze ausgebildet ist, der/die den Glasrohling hält und in den Formungsraum zwischen Metallschmelze und Formenstempel verbringt, insbesondere verfährt.

Alternativ kann ein Einbringen des Glasrohlings in den Formungsraum auch mittels des Formenstempels selbst und/oder einer äußeren axialen Führung des Formenstempels erfolgen. In letzterem Fall ist der Formenstempel neben einer Verfahrbarkeit in axialer Richtung des Formenstempels auch translatorisch in einem Winkel zur axialen Richtung des Formenstempels verfahrbar ausgebildet. Wie vorerwähnt, verfügt der Formenstempel und/oder dessen axiale Führung, die sich in diesem Fall zusammen mit dem Formenstempel ebenfalls translatorisch bewegen lässt, über Öffnungen, über welche ein Vakuum angelegt werden kann, das auf den Flächenkörper aus Glas wirkt, so dass der Glasrohling mittels Vakuum an dem Formenstempel und/oder dessen Führung gehalten werden kann.

Nachdem der Glasrohling in den Formungsraum verbracht worden ist, kann der Glasrohling entweder lose auf der Metallschmelze schwimmend positioniert werden oder nach Wunsch mit seinen Rändern auf dem Rand des Metallbads, d.h. auf dem oberen Rand des Behälters, der das flüssige Metall enthält, oder an der Führung des Formenstempels gehalten und fixiert werden, so dass eine jeweilige Position, insbesondere zur Formung vorgesehene Endposition, des zu formenden Glasrohlings durch eine Bewegung der Halte- und/oder Tragvorrichtung oder der Führung des Formenstempels, die in axialer Richtung von dem Formenstempel unabhängig bewegbar ist, exakt definierbar und gegebenenfalls auch korrigierbar ist. Bei einem sich von jeweils entgegengesetzten Seiten Annähern von Metallschmelze und Formenstempel an den Flachglasrohling erfolgt dann eine Formung des Glasrohlings.

So ist es gemäß einer Ausführungsform der Erfindung möglich, den Glasrohling oder das flüssige Glas auf der Metallschmelze, die sich in einem zur Aufnahme der Metallschmelze geeigneten Gefäß befindet, zu positionieren, so dass das Glas praktisch auf der Metallschmelze schwimmt. Bei einem Aufeinanderzubewegen von Formenstempel und Metallschmelze kann nun der Formenstempel auf das auf Umformtemperatur temperierte Glas abgesenkt werden, wobei der Formenstempel das bei dieser Umformtemperatur weiche Glas in die flüssige Metallschmelze eindrückt und dadurch formt. Im Zuge dieser Formung schmiegt sich das weiche Glas des Glasrohlings unter dem Druck des Formenstempels an die Glaskontaktfläche des Formenstempels an und nimmt die Form der Glaskontaktfläche des Formenstempels an, während die flüssige Metallschmelze als Gegenstempel zu dem Formenstempel dient und von der anderen Seite des temperierten Glasrohlings einen homogenen Gegendruck gegen den Glasrohling ausübt.

Gemäß einer weiteren Ausführungsform der Erfindung kann die Annäherung des Formenstempels und der Metallschmelze auch dadurch erfolgen, dass das Flüssigkeitsniveau des flüssigen Metalls der Metallschmelze erhöht wird, so dass sich nicht der Formenstempel der Metallschmelze von oben nähert, sondern sich die Metallschmelze mit aufschwimmendem Glasrohling an den Formenstempel annähert und den Glasrohling im Zuge dieser Annäherung an den Formenstempel anpresst.

Eine Erhöhung des Flüssigkeitsniveaus des flüssigen Metalls der Metallschmelze kann erfindungsgemäß dadurch erfolgen, dass der Aufnahmeraum für das flüssige Metall mit mehr flüssigem Metall gefüllt wird, so dass das Flüssigkeitsniveau des flüssigen Metalls ansteigt; alternativ kann auch der Boden des Aufnahmeraums für das flüssige Metall und/oder der gesamte Behälter, in welchem sich das Metallbad befindet, beweglich ausgeführt sein, so dass das Niveau des flüssigen Metalls des Metallbads angehoben und abgesenkt werden kann, um für den Pressvorgang eine Annäherung von Metallschmelze und Formenstempel und für einen nachfolgenden Entformungsvorgang eine Entfernung von Metallschmelze und Formenstempel zu ermöglichen.

Die vorgenannten Ausführungsformen der Erfindung können nach Wunsch auch kombiniert werden, nämlich beispielsweise dadurch, dass sowohl das Flüssigkeitsniveau des flüssigen Metalls erhöht wird, während sich gleichzeitig der Formenstempel der Oberfläche der Metallschmelze annähert. Da in diesem Fall zwei gleichzeitig aufeinander zu verlaufende Bewegungen durchgeführt werden, eignet sich eine derartige Kombination für eine Herstellung von dreidimensional geformten Flachglasgegenständen, bei welcher beispielsweise eine hohe Fertigungsgeschwindigkeit gewünscht ist.

Gemäß einer besonders bevorzugten Ausführungsform der Erfindung wird der zu formende Flächenkörper aus Glas mittels einer Halte- und/oder Tragvorrichtung so in den Formungsraum eingebracht, dass der zu formende Flächenkörper aus Glas in seinen äußeren Randbereichen auf dem Rand des Behälters, welcher das flüssige Metall enthält, zu liegen kommt.

Im Zuge des Formungsvorgangs wird der sich auf dem Rand des Behälters befindliche äußere Randbereich des zu formenden Flächenkörpers aus Glas auf dem Rand des Behälters für das flüssige Metall, d. h. auf dem Rand des Metallbads, fixiert, indem der Randbereich des zu formenden Flächenkörpers aus Glas auf der dem Behälterrand gegenüberliegenden Seite mit Druck beaufschlagt wird, so dass der Randbereich des zu formenden Flächenkörpers aus Glas auf dem Behälterrand festgeklemmt wird. Eine derartige Druckbeaufschlagung des zu formenden Flächenkörpers aus Glas an seinen Randbereichen kann erfindungsgemäß besonders vorteilhafterweise umfangsmäßig durch die unabhängig von dem Formenstempel bewegbare Führung des Formenstempels erfolgen.

Auf diese Weise ist der zu formende Flächenkörper aus Glas während des Formungsvorgangs auf dem Rand des Metallbads fixiert und dichtet das Metallbad gleichzeitig gegenüber einem Überlaufen von Metall ab, wenn das Niveau des flüssigen Metalls in dem Metallbad im Zuge des Formungsvorgangs erhöht und der Formenstempel, insbesondere simultan, abgesenkt wird.

Gemäß dieser Ausführungsform der Erfindung können sowohl an der Führung des Formenstempels als auch in einem oberen Abschnitt des Metallbads, beispielsweise an dessen Rand, eine oder mehrere Öffnungen vorgesehen sein, die sowohl einer Entlüftung als auch einer Belüftung des Raums dienen können, der sich nach einer Fixierung des Flächenkörpers aus Glas auf dem Behälterrand zwischen dem Flächenkörper aus Glas und der Oberfläche des flüssigen Metalls befindet. Auf diese Weise ist sowohl ein Absenken als auch ein Anheben des Niveaus des flüssigen Metalls in dem Metallbad möglich, ohne dass sich zwischen dem Flächenkörper aus Glas und der Oberfläche des flüssigen Metalls unerwünschte Gasblasen oder ein Unterdruck ausbilden.

In diesem Zusammenhang sei ferner darauf hingewiesen, dass erfindungsgemäß nicht zwingend das gesamte Flächengebilde aus Glas auf eine Umformtemperatur temperiert wird, sondern in vorteilhafter Weise nur der Bereich, der auch tatsächlich dreidimensional geformt werden soll. Dies bedeutet, dass jeweilige Randbereiche des Flächengebildes aus Glas jederzeit auf einer Handhabungstemperatur, bei welcher das Glas ergriffen und gehandhabt werden kann, gehalten werden können. Auf diese Weise ist es beispielsweise möglich, diese Randbereiche des Flächengebildes aus Glas auch während des eigentlichen Formungsvorgangs mittels der zum Transport des Flächengebildes aus Glas in den Formungsraum und zum Entfernen daraus erfindungsgemäß eingesetzten Halte- und/oder Tragvorrichtung zu greifen und zu halten.

Des Weiteren kann eine Formung des temperierten Glasrohlings auch dadurch erfolgen, dass der Glasrohling auf einen im Betrieb unten liegenden Formenstempel aufgelegt, anschließend temperiert und anschließend durch ein Aufgießen von flüssigem Metall auf den Glasrohling geformt wird, wobei der dann Umformtemperatur habende Glasrohling durch die Gewichtskraft des flüssigen Metalls sowie eine nach Wunsch zusätzlich aufgebrachte Druckkraft auf das flüssige Metall an den unten liegenden Formenstempel angepresst und dadurch geformt wird. Auch bei dieser Ausführungsform der Erfindung kann eine, gegebenenfalls gleichzeitige, vorzugsweise axiale, Bewegung des Formenstempels erfolgen.

Durch den während des Pressvorgangs erfolgenden Kontakt des Formenstempels mit der durch diesen geformten Glasoberfläche findet eine Abkühlung der Glasoberfläche und damit eine Verfestigung des Flächenkörpers statt, so dass der Flächenkörper in seiner durch den Pressvorgang hergestellten Form erstarrt.

Nach einer Verfestigung des hergestellten dreidimensional geformten Flachglasgegenstands wird dieser Flachglasgegenstand so weit abgekühlt, dass der dreidimensional geformte Flachglasgegenstand eine Handhabungstemperatur erreicht. Die Handhabungstemperatur ist erfindungsgemäß dadurch definiert, dass das jeweils geformte Glas eine Viskosität von ≥ 10⁷ Pas hat. Bei einer derartigen Viskosität von ≥ 10⁷ Pas ist das jeweilige Glas soweit verfestigt, dass bei einer Handhabung des Flachglasgegenstands keine Verformung des Flachglasgegenstands mehr erfolgt, so dass der Flachglasgegenstand gehandhabt und aus der Pressvorrichtung entnommen werden kann.

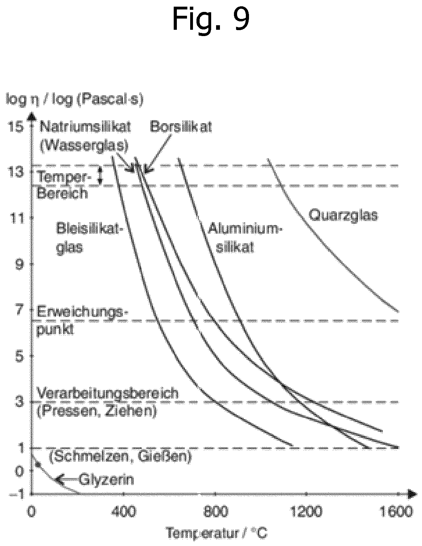

An dieser Stelle sei darauf hingewiesen, dass erfindungsgemäß bevorzugt Aluminiumsilikatglas zur Herstellung des gewünschten dreidimensional geformten Flachglasgegenstands verwendet wird, jedoch auch andere Gläser verwendet werden können. Da diese unterschiedlichen Gläser zum Teil sehr unterschiedliche Erweichungstemperaturen und Verarbeitungstemperaturen aufweisen, wird im Rahmen der vorliegenden Erfindung im Rahmen des Verarbeitungsprozesses nicht auf eine bestimmte Temperatur, sondern eine für einen jeweiligen Vorgang erforderliche Viskosität abgestellt, bei welcher das jeweils verwendete Glas einen für den jeweiligen Bearbeitungsschritt notwendigen Aggregatzustand, wie beispielsweise flüssig, erweicht oder fest hat, damit das jeweils verwendete Glas entweder transportiert oder geformt oder nachbehandelt, beispielsweise feuerpoliert oder anderweitig oberflächenkonditioniert, werden kann. In Fig. 9 sind für unterschiedliche Gläser jeweilige beispielhafte Korrelationen zwischen der jeweiligen Viskosität von verschiedenen Gläsern bei jeweiligen zugehörigen Temperaturen angegeben.

Nachdem der wunschgemäß dreidimensional geformte Flachglasgegenstand auf die Handhabungstemperatur abgekühlt ist, erfolgt eine Entformung des abgekühlten Flächengebildes, d. h. des hergestellten dreidimensional geformten Flachglasgegenstands.

Gemäß einer Ausführungsform der Erfindung wird das Flächengebilde aus Glas oder zumindest ein zu formender Teil des Flächengebildes aus Glas vor Schritt a), d.h. vor einem Einbringen in einen Formungsraum zwischen Metallschmelze und Formenstempel, auf eine Temperatur vorgewärmt, bei welcher das Glas eine Viskosität ≥ 10^{6,5} Pas, bevorzugt ≥ 10⁷ Pas, hat.

Bei einer derartigen Viskosität ist der Glasrohling noch handhabbar und greif- sowie haltbar, aber bereits bis nahe an seine Umformtemperatur vorgewärmt, so dass eine Temperierung des Flächengebildes, respektive dessen zu formenden Teils, innerhalb des Presswerkzeugs auf die Umformtemperatur sehr schnell erfolgen kann.

In diesem Zusammenhang sei erwähnt, dass der Glasrohling im Zuge des Einbringens des Glasrohlings in das Presswerkzeug bereits Erweichungserscheinungen haben kann, da etwaige Unreinheiten oder Mikrostrukturen in der Rohlingoberfläche im Zuge des erfindungsgemäßen Pressvorgangs in vorteilhafter Weise geglättet werden, so dass ein wesentlicher Vorteil des erfindungsgemäßen Verfahrens auch darin besteht, dass auch mikrostrukturierte Rohlinge oder Rohlinge mit kleineren Schäden an der Oberfläche problemlos für das erfindungsgemäße Verfahren eingesetzt werden können. Dies gilt insbesondere dann, wenn eine etwaige beschädigte Oberfläche auf der Metallbadseite des Presswerkzeugs angeordnet wird.

Sofern zur Durchführung des erfindungsgemäßen Verfahrens kein vorgefertigter Glasrohling verwendet werden soll, kann erfindungsgemäß Glas in flüssiger Form auf die Metallschmelze oder den Formenstempel gegossen und anschließend durch Abkühlen auf seine Umformtemperatur temperiert werden. Auf diese Weise ist das erfindungsgemäße Verfahren besonders vielfältig einsetzbar und nicht auf eine Verarbeitung von vorgefertigten Glasrohlingen beschränkt.

Das Temperieren des Flächengebildes aus Glas wird im Falle einer Erwärmung des Rohlings respektive Flächengebildes erfindungsgemäß mittels einer Heizung, beispielsweise einer Infrarot (IR)-Heizung und/oder, gegebenenfalls ergänzend, mittels zumindest einer Induktions- und/oder zumindest einer Mikrowellen-Heizung, durchgeführt. Darüber hinaus kann ein Erwärmen oder Abkühlen des Rohlings auch oder zusätzlich mittels Wärmeleitung durch ein Erwärmen oder Abkühlen der Metallschmelze durchgeführt werden.

Des Weiteren ist es erfindungsgemäß ebenso möglich, dass der Formenstempel über Fluidkanäle verfügt, durch welche eine separate Temperierung des, gegebenenfalls mehrteiligen, Formenstempels möglich ist, so dass der Formenstempel mittels eines Fluids sowohl geheizt als auch gekühlt werden kann, um eine für den jeweiligen Verfahrensschritt optimale Temperatur aufzuweisen. Als Kühlfluid respektive Heizfluid kann bevorzugt ein gasförmiges Fluid eingesetzt werden.

Gemäß einer Ausführungsform der Erfindung wird Schritt c), d. h. ein Aufeinanderzubewegen von Formenstempel und Metallbad mittels wenigstens eines Linearmotors, insbesondere Servomotors, durchgeführt. Die Verwendung eines derartigen eine Linearbewegung erzeugenden Motors ermöglicht eine sehr exakte Steuerung des Presswerkzeugs sowie darüber hinaus eine sofortige und unmittelbare Reaktion im Falle eines Druckanstiegs.

Wie vorerwähnt, handelt es sich bei der erfindungsgemäß verwendeten Metallschmelze um eine Zinnschmelze, da dieses Material gegenüber Glas auch bei hohen Temperaturen inert ist und die Herstellung einer qualitativ optimierten Glasoberfläche ermöglicht, wobei auch eine "Heilung" etwaiger fehlerhafter Stellen an einer Oberfläche des Glasrohlings möglich ist.

Diese "heilende" Eigenschaft der Zinnschmelze wird erfindungsgemäß auch für eine Nachbehandlung des fertig hergestellten dreidimensional geformten Flachglasgegenstands in Form einer Oberflächenkonditionierung genutzt. Zu diesem Zweck kann das geformte Flächengebilde aus Glas nach dessen Abkühlung auf Handhabungstemperatur, beispielsweise mittels eines Greifers und/oder einer Unterdruckhaltevorrichtung, gewendet und mit der Seite, die im Rahmen des Formungsvorgangs nicht mit der Metallschmelze in Kontakt gekommen ist, mit dem flüssigen Zinn in Kontakt gebracht werden. Durch den Kontakt des Glases mit dem flüssigen Zinn werden etwaige fehlerhafte Stellen in der Glasoberfläche und/oder etwaige Spannungen an der Glasoberfläche "korrigiert" respektive repariert, ohne dass hierzu eine manuelle oder maschinelle Nachbearbeitung der Glasoberfläche, beispielsweise durch Schleifen oder Polieren, notwendig wäre.

Gemäß einer bevorzugten Ausführungsform wird die Metallschmelze, mit welcher das Flächengebilde aus Glas im Rahmen einer Oberflächenkonditionierung in Kontakt gebracht wird, mit einer hochfrequenten Vibration beaufschlagt, die beispielsweise mittels Ultraschall erzeugt werden kann. Auf diese Weise wird eine flächig gleichmäßige Kontaktierung des Flächengebildes aus Glas mit dem flüssigen Metall, nämlich flüssigem Zinn, begünstigt.

Des Weiteren wird das erfindungsgemäße Verfahren unter Sauerstoffausschluss, d.h. bevorzugt in einer gegenüber dem Glas, dem flüssigen Metall, insbesondere der Zinnschmelze, und dem Material des Formenstempels inerten Atmosphäre, beispielsweise in einer Edelgasatmosphäre, insbesondere Argonatmosphäre, und/oder Stickstoffatmosphäre und/oder in einer Kohlendioxidatmosphäre durchgeführt. Auf diese Weise kann eine etwaige Oxidation dieser Komponenten sowie insbesondere des Zinnbads vermieden werden.

Gemäß einer bevorzugten Ausführungsform der Erfindung wird das Zinnbad mit dem jeweils verwendeten Inertgas überschichtet, wobei sich insbesondere schwere Edelgase sowie Kohlendioxid aufgrund ihres gegenüber Luft höheren spezifischen Gewichts gut eignen. Gemäß dieser Ausführungsform ist der Behälter, in welchem sich das flüssige Metall, insbesondere Zinn, befindet, in seinem an das Flächengebilde aus Glas und/oder an die Führung des Formenstempels angrenzendem Bereich in Fluidkommunikation mit einem Reservoir für das jeweilige Glas, mit welchem die inerte Atmosphäre über dem Metallbad erzeugt wird.

Erfindungsgemäß können zum Zweck einer Inertgaszuführung beispielsweise auch die eine oder mehrere Öffnungen verwendet werden, mit welchen eine Ent- und Belüftung des Raums zwischen dem Metallbad und dem zu formenden Flächenkörper aus Glas möglich ist.

Um eine Verfahrensführung des eigentlichen erfindungsgemäßen Formungsvorgangs in einer inerten Atmosphäre durchführen zu können, wird der entweder mit einem Greifer, einer Vakuumhaltevorrichtung oder auf einer Tragvorrichtung gehaltene Glasrohling durch eine Schleuse in einen Raum mit einer kontrollierten Atmosphäre verbracht, wobei dieser Raum mit dem jeweils gewünschten Inert- und/oder Schutzgas oder Mischungen daraus gefüllt ist und vorzugsweise unter einem leichten Überdruck steht, um zu verhindern, dass Umgebungsluft in diesen Raum mit kontrollierter Atmosphäre eindringt.

Innerhalb der Schleuse findet zunächst eine Evakuierung sowie anschließend eine Flutung des Raums mit Inert- und/oder Schutzgas statt. Da dieser Vorgang etwas Zeit benötigt, kann erfindungsgemäß gleichzeitig ein Vorheizen des Glasrohlings durchgeführt werden, um auf diese Weise eine Verkürzung des zeitlichen Ablaufs des erfindungsgemäßen Verfahrens zu erreichen.

An dieser Stelle ist es auch denkbar, dass anstelle einer Evakuierung des Schleusenraums eine Verdrängung der darin befindlichen Luft mit dem Inert- und/oder Schutzgas erfolgt, wobei zu diesem Zweck das Inert- und/oder Schutzgas verwendet werden kann, das aufgrund des in dem Formungsraum herrschenden Überdrucks aus diesem ausströmt.

Gemäß einer weiteren alternativen Ausführungsform der Erfindung ist es ferner möglich, die gesamte erfindungsgemäße Pressapparatur unter einer Inert- und/oder Schutzgas-Glocke zu positionieren, die ihrerseits nach unten offen ist und innerhalb der Glocke aufgrund eines geringen Überdrucks innerhalb der Glocke eine Aufrechterhaltung einer kontrollierten Atmosphäre ermöglicht. In diesem Fall findet eine Zu- und Abführung des Glasrohlings sowie des fertigen Glasprodukts von unten in die Glocke hinein und nach unten aus der Glocke heraus statt. Da die Glocke nach unten offen ist, eignet sich für diese Ausführungsform der Erfindung vorzugsweise ein Inertgas, das ein geringeres spezifisches Gewicht als Luft hat.

Im Falle der Auflagerung des Glasrohlings auf einer Tragvorrichtung findet die Erwärmung des Glasrohlings, bevorzugt mittels Infrarotstrahlung, im Wesentlichen von oben statt, während eine Erwärmung des Glasrohlings sowohl von oben als auch von unten möglich ist, wenn der Glasrohling gehalten ist und/oder mit seinen Rändern auf dem Rand des Metallbads aufliegt.

Es sei erwähnt, dass die Verwendung eines Greifers zur Halterung des Glasrohlings erfindungsgemäß vorteilhaft ist, da der Rohling gemeinsam mit dem Greifer sowohl verfahrbar ist als auch gewendet werden kann, was beispielsweise zur Durchführung der Oberflächenkonditionierung äußerst vorteilhaft ist.

Eine Entnahme des geformten Flachglasgegenstands aus dem Presswerkzeug kann erfindungsgemäß mittels des Greifers, jedoch auch mittels einer Vakuumhaltevorrichtung erfolgen, die in den Formenstempel und/oder in die den Formenstempel zumindest teilweise umgebende, vorzugsweise ringförmige, Führung des Formenstempels integriert sein kann. In diesem Fall ist der Formenstempel erfindungsgemäß nicht nur axial, sondern auch lateral verfahrbar ausgebildet. Eine derartige Ausführungsform der Erfindung ist besonders vorteilhaft, da der Formenstempel während des Pressvorgangs ohnehin im Kontakt mit dem geformten Flächengebilde ist und somit auch als Schutz für die gepresste Glasoberfläche dient.

Zum Entnehmen des Flachglasgegenstands aus dem Presswerkzeug kann der Formenstempel über Mikroöffnungen verfügen, über welche ein Vakuum angelegt werden kann, durch welches der geformte Flachglasgegenstand an dem Formenstempel gehalten werden kann. Auf diese Weise kann erfindungsgemäß sichergestellt werden, dass der fertig geformte Flachglasgegenstand während des Entnahmevorgangs sicher an dem Formenstempel haftet und nach einer Entnahme auf einfache Weise durch ein Lösen des Vakuums von dem Formenstempel getrennt werden kann.

Wie vorerwähnt, weist auch die den Formenstempel umgebende Führung des Formenstempels, die beispielsweise im Falle eines runden Formenstempels als Ring ausgebildet sein kann, Öffnungen auf, durch welche ein Unterdruck angelegt werden kann. Diese Führung, die funktional beispielsweise auch als Deckring bezeichnet werden kann, kann entlang der Ränder des Glasrohlings an dem Glasrohling anliegen und den Glasrohling auf diese Weise halten, wenn durch die in der Führung ausgebildeten Öffnungen ein Unterdruck angelegt wird, so dass der Rohling respektive dessen Rand durch die Führung angesaugt wird. Auf diese Weise kann zum einen ein Transport des Glasrohlings erfolgen als auch ein Abheben und Aufnehmen des dreidimensional geformten Flachglasgegenstands von der Metallschmelze.

Des Weiteren kann der Glasrohling auch während des gesamten Fertigungsprozesses von einem Greifer oder einer Tragvorrichtung gehalten werden, wobei der Glasrohling zur Durchführung des erfindungsgemäßen Verfahrens zunächst auf die Tragvorrichtung gelegt oder von dem Greifer ergriffen wird. Mithilfe dieser Halte- und/oder Tragvorrichtung, die beispielsweise mit einem Transportschlitten oder einer anderen Transportvorrichtung verbindbar sein kann, wird der Glasrohling sodann aus der Umgebungsatmosphäre in die Schleuse transportiert und dort auf eine Temperatur erwärmt, die noch ein Greifen und Transportieren des Glasrohlings gestattet, während innerhalb der Schleuse gleichzeitig ein Atmosphärenaustausch stattfindet, im Rahmen dessen die Umgebungsatmosphäre durch eine Inert- und/oder Schutzgasatmosphäre ersetzt wird. Nach einer Vollendung des Atmosphärenaustauschs wird der Rohling sodann in den Formungsraum befördert und zwischen dem Volumen respektive Behälter für die Metallschmelze und dem Formenstempel positioniert. Anschließend findet ein Aufheizen des Glasrohlings auf die Umformtemperatur statt. Der Glasrohling wird während dieses Vorgangs nach wie vor gehalten oder getragen. Eine Formung des Glasrohlings findet nunmehr durch eine Annäherung von Metallschmelze und Formenstempel statt, wobei der Glasrohling einerseits mit der Metallschmelze und andererseits mit dem Formenstempel in innigen Kontakt kommt und dadurch geformt wird, dass die Metallschmelze als Gegenstempel zu dem Formenstempel wirkt und den Glasrohling exakt an die Formenkontur des Formenstempels anpresst.

Wenn der Glasrohling gehalten und auf dem Rand des Metallbads in vorzugsweise das Metallbad abdichtender Weise fixiert ist, kann im Zuge des Formungsvorgangs zusätzliches flüssiges Metall, d. h. flüssiges Zinn, in das für das Metallbad vorgesehene Volumen eingepresst werden, so dass das Niveau des Metallbads, insbesondere Zinnbads, soweit angehoben wird, dass der Glasrohling mit dem flüssigen Zinn in Kontakt kommt, während der Glasrohling von der gegenüberliegenden Seite durch den Formenstempel in seine gewünschte Form gepresst wird.

Während des Pressvorgangs, respektive nach einem Abschluss des Pressvorgangs, findet gleichzeitig eine Abkühlung des geformten Flachglasgegenstands statt, so dass der dann dreidimensional geformte Flachglasgegenstand in der gewünschten Form erstarrt. Die Abkühlung wird erfindungsgemäß primär durch den Formenstempel selbst initiiert, da dieser gegen Ende des Pressvorgangs eine etwas geringere Temperatur als die Umformtemperatur des Glases hat. Da der Formenstempel einen direkten und unmittelbaren Kontakt mit der gesamten geformten Fläche des Flachglasgegenstands hat, kann eine gleichmäßige Abkühlung des Flachglasgegenstands unter die Umformtemperatur auf eine Handhabungstemperatur stattfinden, bei welcher die Viskosität des Flachglasgegenstands so erhöht ist, dass keine weitere Umformung mehr möglich ist.

Gemäß einer Ausführungsform der Erfindung kann der Formenstempel zu diesem Zweck über eine Heiz- sowie über eine Kühlvorrichtung verfügen, damit der Formenstempel während der Durchführung des erfindungsgemäßen Verfahrens jeweils auf die für den jeweiligen Verfahrensschritt notwendige Temperatur temperiert werden kann. Eine derartige Heiz- respektive Kühlvorrichtung kann beispielsweise in Form von innerhalb des Formenstempels ausgebildeten Kanälen oder Leitungen ausgeführt sein, durch welche ein Heiz- oder Kühlfluid strömen kann. Alternativ kann der Formenstempel beispielsweise auch induktiv geheizt werden. Selbiges gilt ebenfalls für die Führung des Formenstempels, da diese Führung zur Vermeidung etwaiger Spannungen zwischen Führung und Formenstempel erfindungsgemäß ebenfalls über eine Heiz- und/oder Kühlvorrichtung verfügt.

Des Weiteren sei an dieser Stelle darauf hingewiesen, dass auch das Metallbad, je nach Verfahrensschritt, sowohl aufgeheizt als auch abgekühlt werden kann, damit der Glasrohling eine zur Formung des Glasrohlings optimierte Temperatur und Viskosität hat. Dies bedeutet, dass der Glasrohling neben der Nutzung einer Induktions- und/oder Infrarotheizung zur Erwärmung des Glasrohlings auch durch einen Kontakt mit dem Metallbad erwärmt oder bei einer Abkühlung des Metallbads auch gekühlt werden kann.

Des Weiteren sei darauf hingewiesen, dass nach einem abgeschlossenen Formungsvorgang das Niveau des Metallbads wieder abgesenkt werden kann. Zu diesem Zweck steht das Metallbad in Fluidkommunikation mit einem Reservoir und/oder Ausgleichsbehälter für flüssiges Metall, wobei aus diesem Behälter auch das zum Auffüllen des Metallbads notwendige flüssige Metall entnommen werden kann.

Nachdem der geformte Flachglasgegenstand soweit erstarrt ist, respektive eine so hohe Viskosität angenommen hat, dass eine weitere unerwünschte Verformung des Flachglasgegenstands nicht mehr stattfindet, wird der Flachglasgegenstand aufgenommen und gewendet und mit seiner Seite, die während des Formungsvorgangs nicht mit dem Metallbad in Kontakt gekommen ist, ebenfalls mit dem Metallbad in Kontakt gebracht, damit die Oberfläche, die bislang lediglich mit dem Formenstempel in Kontakt war, ebenfalls mit dem flüssigen Zinn in Kontakt gebracht wird, so dass etwaige Unreinheiten durch diesen Kontakt mit dem flüssigen Zinn "geheilt" werden und eine perfekte glatte und fehlerfreie Oberfläche des Flachglasgegenstands gebildet wird. Auf diese Weise erhält der erfindungsgemäß hergestellte geformte Flachglasgegenstand beidseitig eine optimierte perfekte Oberfläche.

Nachdem die Oberflächenkonditionierung durchgeführt wurde, wird der nun fertig geformte und oberflächenbehandelte Flachglasgegenstand mithilfe der Halte- und/oder Tragvorrichtung und deren Transportvorrichtung durch eine Schleuse, in welcher wiederum ein Atmosphärenaustausch stattfindet, aus der Formungsvorrichtung heraus und wieder in eine Umgebungsatmosphäre befördert.

Gemäß einer weiteren Ausführungsform der Erfindung kann der Entformungsschritt unter Zuhilfenahme einer Druckluftbeaufschlagung des geformten Flächengebildes durchgeführt werden. Dies ist insbesondere dann nützlich, wenn der geformte Flachglasgegenstand beim Abkühlen mit dem Formenstempel oder der Führung des Formenstempels, beispielsweise dem Ring, beispielsweise durch Schrumpfen, in innigen Kontakt gerät. In diesem Fall kann Druckluft verwendet werden, um den geformten Flachglasgegenstand sanft von dem Formenstempel und/oder dessen Führung abzudrücken.

Wie vorerwähnt, wird das entformte Flächengebilde, respektive der fertig geformte Flachglasgegenstand, erfindungsgemäß zumindest auf einer Seite oberflächenbehandelt, nämlich insbesondere indem die gewünschte zu behandelnde Seite, vorzugsweise unter Wenden des Flächengebildes, mit dem Metallbad oder einem weiteren Metallbad in Kontakt gebracht wird, wobei das weitere Metallbad vorzugsweise eine geringere Temperatur aufweist, als das während des Formungsvorgangs, d.h. in Schritt c), verwendete Metallbad.

An dieser Stelle sei darauf hingewiesen, dass das Metallbad, das zur Nachbehandlung der einen oder mehreren Flächen des dreidimensional geformten Flachglasgegenstands verwendet wird, dasselbe Metallbad sein kann, das auch zur Formung des Glasrohlings verwendet wurde. Alternativ kann auch ein zweites Metallbad vorgesehen sein, das zur Durchführung der Oberflächenkonditionierung respektive -behandlung verwendet wird. Dieses zweite Metallbad ist erfindungsgemäß ebenfalls ein Zinnbad, wobei dieses zweite Metallbad erfindungsgemäß eine etwas geringere Temperatur aufweist, als das zur Formung verwendete Metallbad. Dies ist insbesondere deshalb vorteilhaft, da eine Glättung und Heilung der Oberfläche des Flachglasgegenstands lediglich einen Kontakt mit flüssigem Zinn erfordert, wobei das Zinn allerdings nicht so hoch temperiert sein muss, dass ein Schmelzen des Glases stattfindet; vielmehr ist es zur Durchführung der Oberflächenkonditionierung ausreichend, wenn ausschließlich einige Mikrometer der zu bearbeitenden Oberfläche des Flachglasgegenstands soweit erweicht werden, dass durch die Oberflächenspannung des Glases eine Glättung des Glases erfolgen kann.

Im Übrigen kann das erfindungsgemäße Verfahren sowohl als kontinuierliches, d.h. Durchlaufverfahren, als auch als sogenanntes Batchverfahren durchgeführt werden, wobei der jeweilige Glasgegenstand mittels einer Haltevorrichtung gehalten oder alternativ mittels wenigstens einer Tragvorrichtung sowie gegebenenfalls wenigstens einer Wendevorrichtung gehandhabt wird.

Gemäß einer weiteren Ausführungsform der Erfindung kann der Glasrohling außerhalb der Formungsvorrichtung, d. h. in Umgebungsatmosphäre, auch auf einer Tragvorrichtung, wie beispielsweise eine Lanze, aufgelegt werden, mit welcher er dann wiederum mit einer Transportvorrichtung, wie beispielsweise einem Schlitten oder einem anderen Verschiebemechanismus, in die Schleuse befördert wird, in welcher ein Atmosphärenaustausch hin zu einer inerten Atmosphäre stattfindet. In dieser Schleuse kann der Glasrohling auf eine Temperatur vorerwärmt werden, bei welcher seine Viskosität für eine Handhabung und einen Transport des Glasrohlings noch genügend hoch ist. Anschließend, d. h. nach dem Atmosphärenaustausch, verlässt der Glasrohling auf der Tragvorrichtung liegend die Schleuse und wird mittels der Lanze, respektive der Tragvorrichtung, zwischen das Zinnbad, respektive das Volumen oder den Behälter zur Aufnahme des Zinnbads, und den Plunger, d. h. den Formenstempel, und dessen Führung, d. h. beispielsweise einen Ring, geführt. Dort übernimmt die oberhalb des Glasrohlings angeordnete Führung des Formenstempels den weiteren Transport des Glasrohlings, indem die Führung die Ränder des Glasrohlings über Vakuumdüsen ansaugt, von der Tragvorrichtung, beispielsweise Lanze, abhebt und anschließend auf dem Zinnbad oder dessen Rand ablegt. Im Anschluss daran wird der zunächst hinter die Führung zurückgezogene Formenstempel durch die Führung nach vorne auf den Glasrohling zubewegt, während auf der anderen Seite des Glasrohlings das Niveau und/oder der Druck des Metallbads soweit angehoben, respektive erhöht, wird, dass das Metallbad als Gegenstempel zu dem Formenstempel wirkt und der zwischen Formenstempel und Metallbad angeordnete Glasrohling geformt wird.

Nach erfolgter Formung des Glasrohlings wird der erzeugte geformte Flachglasgegenstand wiederum von dem Ring erfasst, d. h. per Unterdruck angesaugt und von dem Metallbad oder dem Rand des Metallbads abgehoben.

Anschließend wird der geformte Flachglasgegenstand entweder auf einer zweiten Tragvorrichtung, wie beispielsweise einer zweiten Lanze, abgelegt und wiederum durch eine Schleuse aus der Formungsvorrichtung heraus transportiert.

Erfindungsgemäß wird der geformte Flachglasgegenstand vor einem Austrag aus der Formungsvorrichtung auch noch einer Oberflächenkonditionierung unterzogen. In diesem Fall wird der von der Führung des Formenstempels von dem Metallbad abgehobene Flachglasgegenstand auf seiner der Führung gegenüberliegenden Seite von einem Vakuumgreifer gefasst und so gewendet, dass die Seite des geformten Flachglasgegenstands, die bislang noch nicht mit einem Metallbad in Kontakt gekommen ist, mit dem Zinnbad in Kontakt gebracht wird, so dass durch den Kontakt des Glases mit dem Zinnbad eine Heilung etwaiger Fehler stattfinden kann. Auch in diesem Fall kann entweder das zur Formung verwendete Zinnbad oder ein diesem Zinnbad nachgelagertes Zinnbad, das gegebenenfalls eine geringere Temperatur als das zur Formung verwendete Zinnbad haben kann, verwendet werden.

An dieser Stelle sei ferner erwähnt, dass der Vakuumgreifer, d.h. die verwendete Vakuumhaltevorrichtung, den geformten Flachglasgegenstand nach Durchführung der Oberflächenkonditionierung entweder wiederum auf einer Tragvorrichtung ablegen oder direkt durch die Schleuse aus der Formungsvorrichtung ausfahren kann.

Des Weiteren sei an dieser Stelle erwähnt, dass der eigentliche Formungsvorgang sowie gegebenenfalls die Oberflächenkonditionierung des Flachglasgegenstands auch bei Unterdruck, respektive in einem weitgehend vakuumierten Raum, ausgeführt werden kann.

Des Weiteren wird die erfindungsgemäße Aufgabe insbesondere auch durch eine Vorrichtung zum Herstellen eines Glasgegenstands, insbesondere eines dreidimensional geformten Flachglasgegenstands, insbesondere mittels eines Verfahrens gemäß vorstehenden Ausführungen gelöst, wobei die Vorrichtung einen zur Aufnahme von schmelzflüssigem Metall, insbesondere Zinn, geeigneten Aufnahmeraum sowie einen dem Aufnahmeraum gegenüberliegenden Formenstempel aufweist, wobei in Richtung des Aufnahmeraums und benachbart zu dem Formenstempel ein Formungsraum angeordnet ist, in welchen ein Flächengebilde aus Glas, insbesondere ein Glasrohling oder flüssiges Glas, einbringbar ist und wobei der Formenstempel und die Metallschmelze aufeinander zu bewegbar sind und der Formenstempel gegebenenfalls Öffnungen zum Anlegen von Unterdruck oder Überdruck aufweist, so dass das Flächengebilde aus Glas einerseits von dem Formenstempel und andererseits von der Metallschmelze mit Druck beaufschlagbar und durch die beidseitige Druckbeaufschlagung und/oder durch ein Ansaugen und Anschmiegen des Flächengebildes aus Glas an den Formenstempel formbar und der Formenstempel von einem Rahmen, insbesondere Ring, wie beispielsweise Deckring, umgeben, insbesondere geführt, ist, wobei der den Formenstempel umgebende Rahmen, insbesondere Ring, Öffnungen aufweist, wobei über die Öffnungen an einer Kontaktfläche zwischen dem Flächengebilde aus Glas und dem Formenstempel ein Unterdruck oder ein Überdruck erzeugbar ist.

Gemäß einer Ausführungsform der Erfindung steht der Aufnahmeraum für flüssiges Metall, insbesondere Zinn, in Fluidkommunikation mit einem zur Aufnahme und Abgabe von schmelzflüssigem Zinn geeigneten und gegebenenfalls mit Druck beaufschlagbaren Ausgleichsbehälter.

Auf diese Weise ist es erfindungsgemäß zum einen möglich, während eines Formungsvorgangs einen Gegendruck des Zinns zu erhöhen als auch Zinn aus dem Ausgleichsbehälter zur Erhöhung des flüssigen Metallspiegels, respektive flüssigen Metallniveaus, zu verwenden. Darüber hinaus kann der Ausgleichsbehälter zur Niveauregulierung des Metallspiegels verwendet werden, wenn der Formenstempel das auf die Umformtemperatur erwärmte Flächengebilde aus Glas zur Formung in das Metallbad eindrückt.

Erfindungsgemäß ist der Formenstempel aus einem hochtemperaturbeständigen Material, wie beispielsweise einem hochschmelzenden Metall, beispielsweise Stahl, Gold, Kupfer, Ruthenium, Osmium, Zirconium, Hafnium, Niob, Tantal, Chrom, Molybdän oder Wolfram oder einer hochschmelzenden Legierung oder einer bei Temperaturen im Bereich von 700°C bis 1600°C gegenüber Glas inerten Keramik, wie beispielsweise einem Carbid oder Nitrid, hergestellt oder mit einem solchen hochtemperaturbeständigen Material beschichtet.

Wie vorerwähnt, kann der Formenstempel wenigstens einen Hohlraum, insbesondere wenigstens einen Kanal und/oder eine Leitung, aufweisen, der/die mit einem, insbesondere gasförmigen, Heiz- oder Kühlfluid durchströmbar ist.

Auf diese Weise ist eine separate Temperierung des Formenstempels möglich, so dass die Temperatur des Formenstempels einem jeweiligen Verfahrensschritt angepasst werden kann. So kann der Formenstempel beispielsweise zur Beschleunigung einer Abkühlung des fertig geformten Flachglasgegenstands kontrolliert abgekühlt oder während des Pressvorgangs auf einer erhöhten Temperatur gehalten werden, wenn dies gewünscht ist.

Des Weiteren weist der Formenstempel und/oder dessen Führung Öffnungen auf, über welche an einer Kontaktfläche zwischen dem Flächengebilde aus Glas und dem Formenstempel ein Unterdruck oder ein Überdruck erzeugbar ist.

Auf diese Weise ist es möglich, den Formenstempel und/oder dessen Führung selbst als Transportwerkzeug für den Glasrohling einerseits sowie für den fertig geformten Flachglasgegenstand andererseits zu verwenden, indem der Glasrohling oder der Flachglasgegenstand mit Unterdruck an dem Formenstempel gehalten und transportiert wird. Eine Anwendung von Überdruck kann verwendet werden, wenn sich der Glasrohling oder der Flachglasgegenstand nicht von selbst von dem Formenstempel lösen. Für den Fall, dass eine Verwendung von Überdruck zur Lösung des Glasrohlings in dem Presswerkzeug erforderlich ist, kann zur Erzeugung des Überdrucks ein Inertgas, wie beispielsweise Stickstoff oder Argon, verwendet werden. Auch Druckluft ist an dieser Stelle anwendbar. Zu diesem Zweck kann die Gaszufuhr des Formenstempels über ein Umschaltventil verfügen, so dass, je nach Wunsch, ein gewünschtes Gas oder Luft zum Lösen des Gegenstands von dem Formenstempel verwendet werden kann.

Gemäß einer weiteren vorteilhaften Ausführungsform der Erfindung kann die Vorrichtung wenigstens einen Transportschlitten aufweisen, um ein Flächengebilde aus Glas durch eine Schleuse der Vorrichtung, die für einen Austausch der äußeren Atmosphäre gegen eine Inertgas- und/oder Schutzgasatmophäre oder zur Erzeugung eines Unterdrucks respektive Vakuums innerhalb des eigentlichen Formungs- und/oder eines Nachbehandlungsraums dient, in den Formungsraum einzubringen und/oder einen geformten Flachglasgegenstand aus dem Formungsraum zu entnehmen. Der Transportschlitten ist hierbei zwischen einer Position in dem Presswerkzeug in einer Pressposition und einer Position außerhalb des Presswerkzeugs verfahrbar, so dass sowohl der Glasrohling als auch der fertig geformte Flachglasgegenstand unter Zuhilfenahme des Transportschlittens transportiert werden können. So kann beispielsweise entweder der Formenstempel und/oder dessen Führung oder alternativ eine Haltevorrichtung oder eine anderweitige Tragvorrichtung, wie beispielsweise eine Lanze, an dem Transportschlitten angebracht sein, um sowohl den Glasrohling in das Presswerkzeug hinein als auch den fertig geformten Flachglasgegenstand anschließend aus dem Presswerkzeug heraus zu befördern. Des Weiteren kann der Transportschlitten auch mehrere Formenstempel, Haltevorrichtungen und/oder Tragvorrichtungen aufweisen, die jeweils alternierend oder nacheinander den Glasrohling und den fertig geformten Flachglasgegenstand formen und befördern. Auf diese Weise ist erfindungsgemäß beispielsweise ein, vorzugsweise kontinuierlicher, Kreisbetrieb möglich.

Die erfindungsgemäße Vorrichtung kann, wie vorerwähnt, je nach Wunsch entweder im Batchbetrieb oder im kontinuierlichen Durchlaufbetrieb betrieben werden. Während die erfindungsgemäße Vorrichtung im Falle einer Verfahrensführung im Batchbetrieb nur eine Schleuse aufweist, kann die erfindungsgemäße Vorrichtung für eine Verfahrensführung im kontinuierlichen Durchlaufbetrieb auch zwei oder mehr, vorzugsweise sich gegenüberliegend angeordnete, Schleusen aufweisen, wobei eine erste Schleuse als Eingangsschleuse und eine zweite, insbesondere gegenüberliegende, Schleuse als Ausgangsschleuse dient.

Des Weiteren weist die erfindungsgemäße Vorrichtung wenigstens eine Heizung, beispielsweise eine Infrarot (IR)-Heizung und/oder, gegebenenfalls ergänzend, zumindest eine Induktions- und/oder zumindest eine Mikrowellen-Heizung, auf, um insbesondere den Glasrohling sowie nach Wunsch auch Komponenten des Presswerkzeugs, insbesondere das Metallbad, zu erwärmen.

Gemäß einer weiteren vorteilhaften Ausführungsform der Erfindung kann der Formenstempel, vorzugsweise mittels wenigstens einer Kupplungsvorrichtung, austauschbar sein. Etwaige weitere Kupplungen können für an den Formenstempel angeschlossene Komponenten, wie beispielsweise eine Fluidzufuhr oder eine Vakuumeinrichtung, vorgesehen sein.

Ein weiterer wichtiger Aspekt der Erfindung besteht ferner darin, dass der Formenstempel ein- aber auch mehrteilig ausgebildet sein kann. Eine mehrteilige Ausbildung des Formenstempels ermöglicht es beispielsweise einen Flachglasgegenstand herzustellen, der Hinterschneidungen aufweist, wobei der Formenstempel, respektive der jeweilige die jeweilige Hinterschneidung überdeckende Teil des Formenstempels, soweit zurückgezogen werden kann, dass eine Entformung des geformten Flachglasgegenstands möglich ist. Erfindungsgemäß sind die jeweiligen Teile eines mehrteilig ausgebildeten Formenstempels individuell und unabhängig voneinander bewegbar, wobei die einzelnen Teile eines derartigen mehrteiligen Formenstempels während respektive vor einem Press- oder Formungsvorgang jeweils dicht aneinanderfügbar sind, so dass der mehrteilige Formenstempel während des Formungsvorgangs eine glatte und homogene Oberfläche zur Durchführung der Formung des Flachglasgegenstands aufweist.

Somit wird eine Metallschmelze, insbesondere eine Zinnschmelze, verwendet, die als Gegenstempel zu einem festen Formenstempel und für eine Herstellung eines dreidimensional geformten Flachglasgegenstands dient.

Zusammenfassend kann das erfindungsgemäße Verfahren sowie dessen Vorteile, d.h. insbesondere der Einsatz von flüssigem Zinn als flüssigem Glaskontaktwerkstoff, wie folgt festgehalten werden.

Die Nutzung von flüssigem Zinn ermöglicht es, den Formungsprozess nicht ausschließlich in der Phase des Abkühlprozesses zu realisieren, sondern bereits einen Schritt vorher, d.h. in der Phase der Konditionierung des Glases auf eine optimale Formungstemperatur und Temperaturhomogenität, einzusetzen. Dies ermöglicht es, dass Glas dem Formungsprozess unter optimalen Bedingungen zugeführt werden kann.

Ferner ermöglicht das erfindungsgemäße Verfahren eine Ausweitung der Temperaturparameter im Prozess, da die Temperatur des Zinns nicht nur eine Minimierung des Temperaturdeltas zwischen Form und Glas, sondern auch eine Umdrehung des Temperaturdeltas ermöglicht.

So kann das Zinnbad beim Beladen mit dem Glasrohling eine höhere Temperatur aufweisen, als das Glas beim Beladen selbst hat, wobei das Zinnbad in diesem Fall seine Temperatur an das Glas abgeben kann.

Ferner ermöglicht das Zinnbad aufgrund der hohen Wärmeleitfähigkeit des Zinns eine sehr schnelle Temperaturführung während des Aufheizprozesses sowie ferner eine Vorkonditionierung des Glasrohlings in Form einer Aufheizung auf die Umformtemperatur und ein Halten der Temperatur während des Formungsprozesses sowie ferner eine Kontrolle der Temperaturparameter während der Formung, wodurch ein Formgebungszeitfenster in vorteilhafter Weise vergrößert wird.

Dies resultiert in einer verbesserten Prozessführung durch eine aktive Kontrolle von sowohl der Zeit als auch des Formungsdrucks, des Haltedrucks und der Temperaturführung in den einzelnen Prozessstadien. Hierdurch wird wiederum eine Glashomogenisierung über die Zeit, d.h. eine Durchwärmung, Rückerwärmung und eine Kontrolle der Temperaturgradienten im Glas während der Formgebung und Abkühlung, ermöglicht.

Somit ergibt sich ein erweiterter Spielraum bei der Temperaturführung durch eine aktive Temperaturführung und nicht, wie beim Stand der Technik, durch eine passive Wärmeleitfähigkeit oder eine indirekte Luft-/Wasserkühlung des Formenwerkzeugs.

Eine Regulierung des Zinndrucks kann mittels wenigstens einem Servoventil erfolgen.

Eine Prozessführung kann im Sinne einer Reduzierung der Prozesszeit im eigentlichen Formungs-/Umformungsprozess auf ein Minimum reduziert werden, indem beispielsweise ein vorgeschaltetes Erwärmen des Glasrohlings sowie gegebenenfalls nachgeschaltete Prozesse, wie beispielsweise eine dezidierte Abkühlung, eingebunden werden.

Ferner ist durch die Verwendung eine Zinnbads im Zuge des erfindungsgemäßen Formgebungsverfahrens eine Verbesserung der Oberflächengüte des geformten dreidimensionalen Flachglasgegenstands durch den Kontakt mit Zinn möglich.

So führt eine Bildung einer dünnen Zinnoxidschicht auf der geformten Glasoberfläche als inhärenter Bestandteil des Glases zu einer optimierten Oberflächenstruktur des geformten dreidimensionalen Flachglasgegenstands.

Ferner besteht die Möglichkeit, in einem zwischengeschalteten Prozessschritt diejenige Seite des Glasbauteils, die aufgrund der Dreidimensionalität des Glasgegenstands nicht im Kontakt mit dem Zinnbad war, in einem Temperaturbereich, in dem keine geometrische Verformung stattfindet, mit warmem flüssigem Zinn in Kontakt zu bringen, so dass eine "Ausheilung" von Oberflächendefekten des Glases bewirkt wird.

Weitere Ausführungsformen der Erfindung ergeben sich aus den Unteransprüchen.

Nachfolgend wird die Erfindung anhand eines Ausführungsbeispiels beschrieben, das anhand der Abbildungen näher erläutert wird. Hierbei zeigen:
- Fig. 1: eine schematische Darstellung der erfindungsgemäßen Vorrichtung zum Herstellen eines dreidimensional geformten Flachglasgegenstands gemäß einer ersten Ausführungsform in geöffneter Stellung;
- Fig. 2: eine schematische Darstellung der erfindungsgemäßen Vorrichtung gemäß der in Fig. 1 dargestellten Ausführungsform mit aufgelegtem Flachglasrohling;
- Fig. 3: eine schematische Darstellung der erfindungsgemäßen Vorrichtung gemäß der in Fig. 1 dargestellten Ausführungsform in Vorbereitung des Formungsvorgangs;
- Fig. 4: eine schematische Darstellung der erfindungsgemäßen Vorrichtung gemäß der in Fig. 1 dargestellten Ausführungsform in weiter fortgeschrittener Vorbereitung des Formungsvorgangs;
- Fig. 5: eine schematische Darstellung der erfindungsgemäßen Vorrichtung gemäß der in Fig. 1 dargestellten Ausführungsform während des Formungsvorgangs;
- Fig. 6: eine schematische vergrößerte Detaildarstellung eines in Fig. 2 markierten Ausschnitts Z;
- Fig. 7: eine schematische vergrößerte Detaildarstellung eines in Fig. 3 markierten Ausschnitts Y;
- Fig. 8: eine schematische vergrößerte Detaildarstellung eines in Fig. 4 markierten Ausschnitts X; und
- Fig. 9: ein Diagramm, welches beispielhaft eine Korrelation zwischen der jeweiligen Viskosität von verschiedenen Gläsern mit jeweiliger zugehöriger Temperatur angibt.

In der nachfolgenden Beschreibung werden für gleiche und gleichwirkende Teile dieselben Bezugszeichen verwendet.

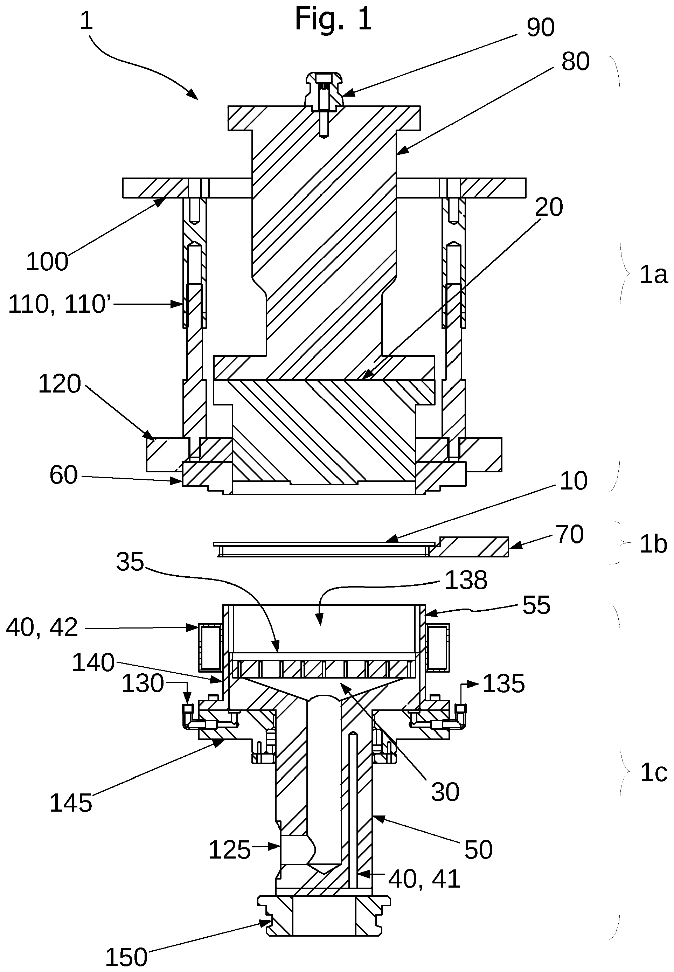

Fig. 1 zeigt eine schematische Darstellung der erfindungsgemäßen Vorrichtung 1 zum Herstellen eines dreidimensional geformten Flachglasgegenstands 10 gemäß einer ersten Ausführungsform. Gemäß Fig. 1 ist die erfindungsgemäße Vorrichtung 1 in einer geöffneten Ausgangsstellung dargestellt.

Die erfindungsgemäße Vorrichtung 1 umfasst im Wesentlichen drei Untereinheiten, nämlich eine Stempeleinheit 1a, eine Transporteinheit 1b für das Flächengebilde aus Glas 10 sowie eine Gegenstempeleinheit 1c, die als Metallbadeinheit ausgebildet ist.

Die Stempeleinheit 1a besteht wiederum aus dem Formenstempel 20, einer Stempelaufnahme 80, an welcher der Formenstempel 20 mittels einer Befestigungseinrichtung, vorzugsweise eines Schnellspannsystems 90, angebracht ist. Des Weiteren umfasst die Stempeleinheit 1a eine Deckringeinheit, die ihrerseits einen Befestigungsring 100, einen an dem Befestigungsring 100 befestigten und rechtwinklig nach unten, d. h. in Richtung Gegenstempeleinheit 1c, ausgerichteten Hängebolzen 110, in dem in axialer Richtung ein Bolzen 110' geführt ist, sowie eine Aufnahme 120 und einen Deckring 60 umfasst. Die Aufnahme 120 dient einer Befestigung des Bolzens 110', der seinerseits in dem Hängebolzen 110 gleitfähig angeordnet ist, so dass durch ein Zusammenwirken von Befestigungsring 100, Hängebolzen 110, Bolzen 110', Aufnahme 120 und Deckring 60 eine Führung der Stempeleinheit 1a sowie insbesondere des Formenstempels 20 möglich ist.

Die Transporteinheit 1b besteht im Wesentlichen aus einer Haltevorrichtung 70, mit welcher es möglich ist, das Flächengebilde aus Glas 10 zu halten, insbesondere unterstützend zu tragen, und zu transportieren.

Die Gegenstempeleinheit, respektive Metallbadeinheit 1c, umfasst erfindungsgemäß gemäß dem in Fig. 1 dargestellten Ausführungsbeispiel der Erfindung zwei Heizungen 40, die ihrerseits zumindest ein Heizelement 41 sowie eine Spule 42 zur induktiven Beheizung des Metallbads umfassen. Des Weiteren umfasst die Gegenstempeleinheit 1c einen wannenförmigen Behälter 50 für eine Aufnahme von flüssigem Metall, insbesondere Zinn, 30 sowie eine Zu- und Abführöffnung 125 für das flüssige Metall sowie ferner einen Inertgaseinlass 130 und einen Inertgasauslass 135, über welche ein Inertgas, beispielsweise Kohlendioxid, zur Überschichtung des Metallbads 30 zugeführt und abgeführt werden kann.

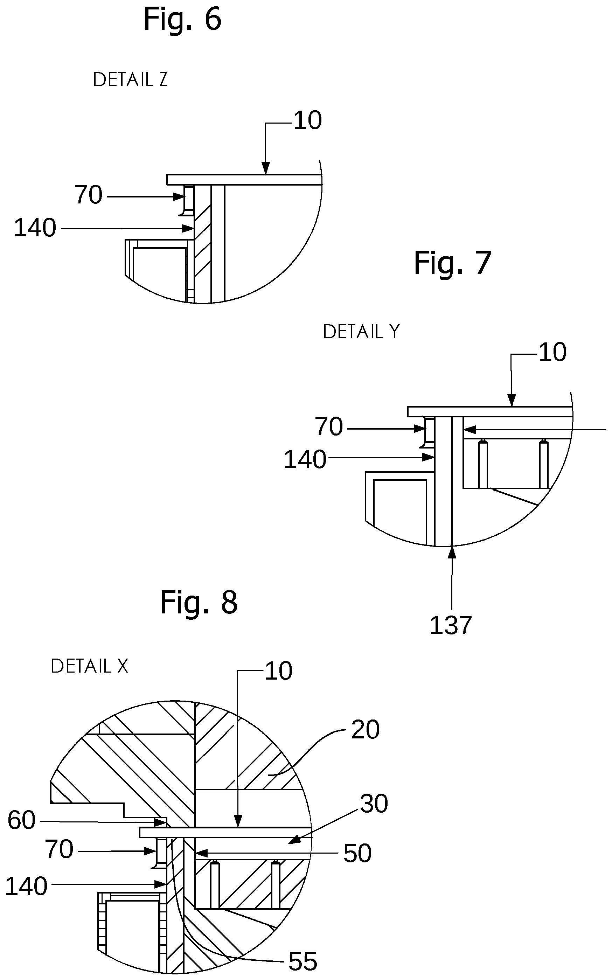

Des Weiteren umfasst die Gegenstempeleinheit 1c einen Inertgasraum 138, der oberhalb eines Niveaus 35 des Metallbads 30 angeordnet ist und dazu dient das Metallbad 30 mit einem gegenüber Luft spezifisch schwereren Inertgas zu überschichten. Der Inertgasraum 138 steht seinerseits über einen in Fig. 7 im Detail dargestellten Ringspalt 137 mit einem Inertgasaufnahmeraum 139 in Fluid-, insbesondere Gaskommunikation. Der Inertgasaufnahmeraum 139 sowie nach Wunsch auch der Ringspalt 137 selbst ist wiederum mit dem Inertgaseinlass 130 und dem Inertgasauslass 135 in Fluid-, insbesondere Gaskommunikation.

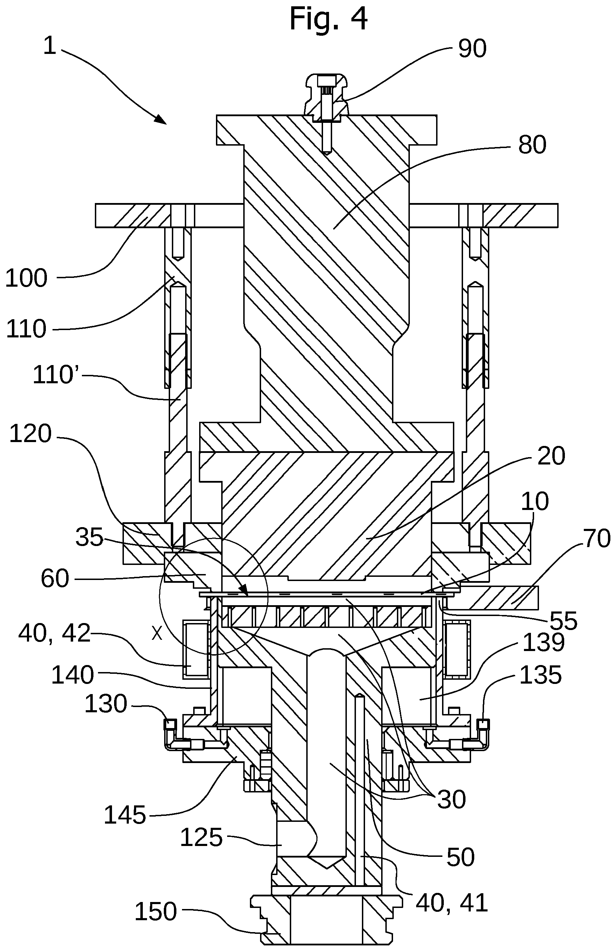

Ferner ist die Gegenstempeleinheit 1c mit einem Schnellwechselsystem 150 zur Anbindung an eine Presse respektive Hubvorrichtung (nicht gezeigt) ausgestattet, wobei es mittels einer solchen Hubvorrichtung möglich, ist die Gegenstempeleinheit 1c in ihrer Gesamtheit und/oder den Behälter 50 relativ zu u.a. der Außenmuffe 140 und der Dichtscheibe 145 in vertikaler Richtung anzuheben oder abzulassen. Eine derartige Relativbewegung geht beispielsweise aus einem Vergleich der Fig. 1 und der Fig. 3 bis 5 hervor, wobei die Fig. 1 bis 5 jeweilige Betriebszustände der erfindungsgemäßen Vorrichtung zeigen, die zur Herstellung des dreidimensional geformten Flachglasgegenstands 10 von der erfindungsgemäßen Vorrichtung reversibel durchlaufen werden.

Erfindungsgemäß umfasst die Gegenstempeleinheit 1c ferner eine das Metallbad 30 umgebende Außenmuffe 140 mit Dichtscheibe 145.

Gemäß Fig. 1 sind die Stempeleinheit 1a, die Transporteinheit 1b und die Gegenstempeleinheit 1c in schematischer Ansicht beabstandet voneinander dargestellt.

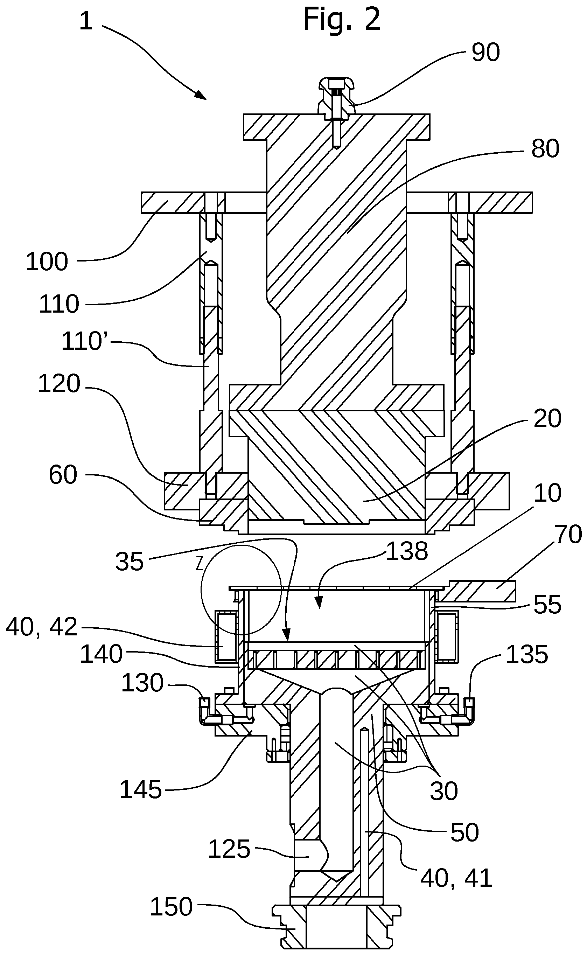

Aus Fig. 2 geht der weitere Verlauf eines erfindungsgemäß durchgeführten Formungsvorgangs zur Herstellung eines dreidimensional geformten Flachglasgegenstands 10 hervor, bei welchem der Flachglasgegenstand 10 mittels der Haltevorrichtung 70 auf dem Rand 55 der Wanne für flüssiges Metall 50 abgelegt ist.

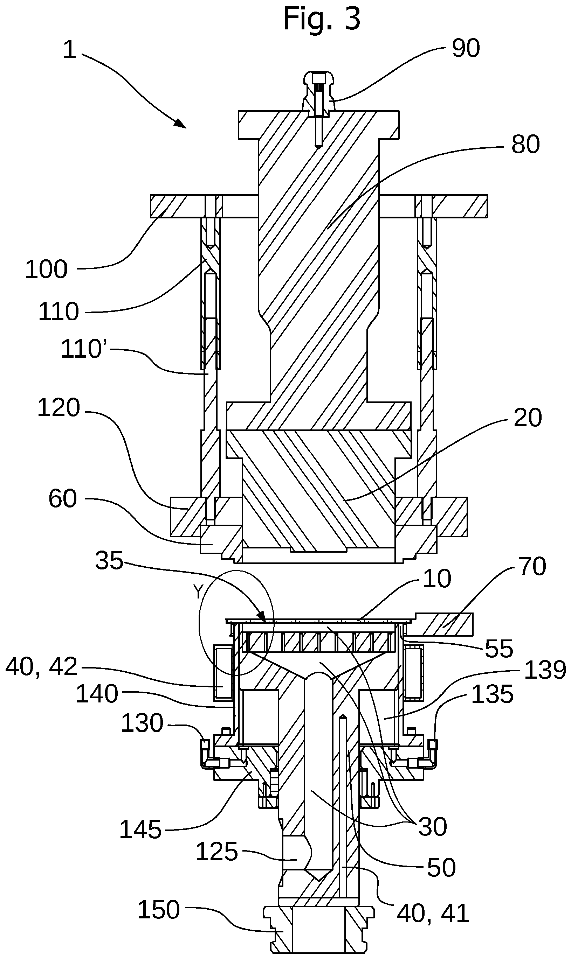

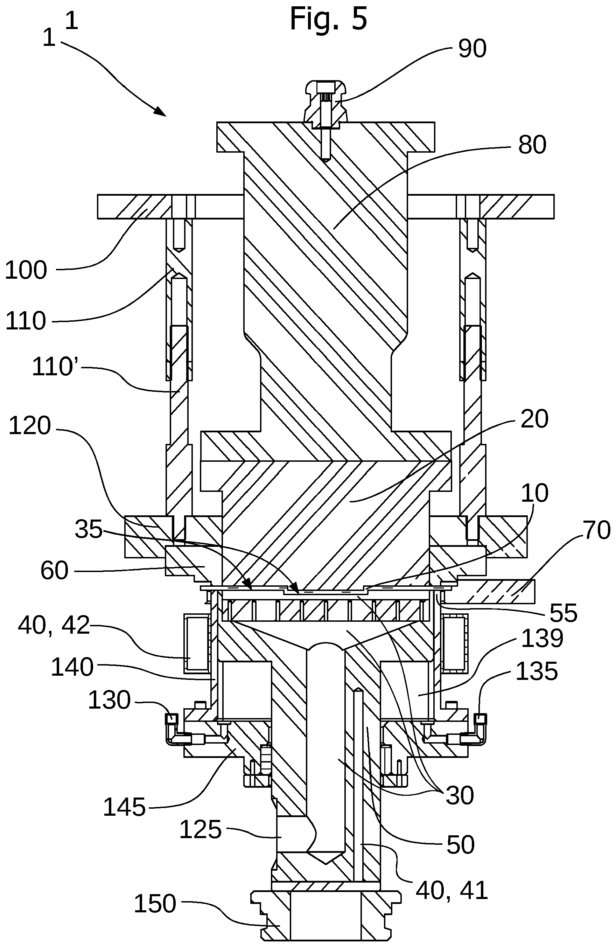

Im weiteren Verlauf des erfindungsgemäß durchgeführten Formungsvorgangs zur Herstellung eines dreidimensional geformten Flachglasgegenstands 10 ist in Fig. 3 gezeigt, dass der Behälter 50 für das flüssige Metall 30 relativ zu der Außenmuffe 140 und der Dichtscheibe 145 angehoben ist, wobei durch das Anheben des Behälters 50 für das flüssige Metall das Inertgas über den Ringspalt 137 aus dem Inertgasraum 138 heraus und in den Inertgasaufnahmeraum 139 hinein befördert, insbesondere gedrückt, wurde. In diesem Zustand liegt der Flachglasrohling 10 einerseits mit seinem Randabschnitt auf dem Wannenrand 55 des Behälters 50 für flüssiges Metall 30 auf und ist andererseits auf seiner Unterseite in Kontakt mit dem flüssigen Metall 30. Durch den Kontakt des Randabschnitts des Flachglasrohlings 10 mit dem Wannenrand 55 ist gewährleistet, dass dieser Randabschnitt des Flachglasrohlings 10 im Verhältnis zu dem mit dem flüssigen Metall 30 in Kontakt befindlichen Abschnitt des Flachglasrohlings 10 kühler bleibt und nach einem Absenken des Deckrings 60 auf den Randabschnitt des Flachglasrohlings 10 eine derartige Dichtung zur Verfügung stellt, dass im Zuge eines sich anschließenden und in Fig. 5 dargestellten Pressvorgangs, kein Metall zwischen Wannenrand 55 und Flachglasrohling 10 austreten kann.

Der in Fig. 5 dargestellte Betriebszustand der erfindungsgemäßen Vorrichtung zeigt, in welcher Weise der Flachglasrohling 10 durch ein Absenken des Formenstempels 20 zu einem dreidimensional geformten Flachglasgegenstand 10 geformt wird. Da im Zuge eines Formungsvorgangs, je nach gewünschter Form des dreidimensional geformten Flachglasgegenstands 10, flüssiges Metall 30 verdrängt wird, steht die Aufnahme 50 für das flüssige Metall 30, respektive die hierfür vorgesehene Wanne, mit einer Zu- und Abführöffnung 125 für flüssiges Metall 30 in Fluidkommunikation mit einem druckbeaufschlagbaren Ausgleichsbehälter (nicht gezeigt) über welchen zum einen das Niveau des Metallbads steuerbar ist und über welchen zum anderen gegenüber dem Formenstempel 20 ein Gegendruck erzeugt werden kann, der dann mittels des Metallbads 30 auf die dem Formenstempel 20 gegenüberliegende Seite des zu formenden Flachglasgegenstands 10 einwirkt. Die weiteren Fig. 6, Fig. 7 und Fig. 8 zeigen jeweilige Detaildarstellungen der in den Fig. 2 bis Fig. 4 gekennzeichneten Abschnitte Z, Y und X.

Im weiteren Fortgang der Herstellung des gewünschten dreidimensional geformten Flachglasgegenstands 10 erfolgt nach der Formung des Flachglasgegenstands 10 eine zur Formung entgegengesetzte Verfahrensführung der erfindungsgemäßen Vorrichtung, bei welcher die Stempeleinheit 1a von der Gegenstempeleinheit 1c entfernt und im Anschluss die Transporteinheit 1b mit dem Flachglasgegenstand 10 aus der Formungsposition entnommen wird. Im Anschluss daran kann der geformte Flachglasgegenstand 10 beispielsweise mittels eines Vakuumhalters von der Haltevorrichtung 70 entnommen, gewendet und zum Zweck einer Oberflächenkonditionierung auf ein weiteres Metallbad 30 aufgelegt werden; denkbar ist an dieser Stelle auch, dass zunächst die Randabschnitte des Flachglasgegenstands 10 entfernt werden und dass der Flachglasgegenstand 10 nach dem Wenden im selben Metallbad 30 oberflächenkonditioniert wird, das auch als Gegenstempel zu dem Formenstempel 20 gedient hat.

**Bezugszeichenliste**

| | | | |
|---|---|---|---|
| 1 | erfindungsgemäße Vorrichtung | 1c | Gegenstempeleinheit, Metallbadeinheit |
| 1a | Stempeleinheit | | |
| 1b | Transporteinheit | 10 | Flächengebilde aus Glas |
| 20 | Formenstempel | 100 | Befestigungsring |
| 30 | Schmelze aus flüssigem Metall, Metallbad | 110 | Hängebolzen |
| | | 110' | Bolzen |
| 35 | Niveau des Metallbads | 120 | Aufnahme |
| 40 | Heizung | 125 | Zu- und Abführöffnung für flüssiges Metall |
| 41 | Heizelement | | |
| 42 | Spule | 130 | Inertgaseinlass |
| 50 | Aufnahme, Behälter, Wanne für flüssiges Metall | 135 | Inertgasauslass |
| | | 137 | Ringspalt |
| 55 | Wannenrand | 138 | Inertgasraum |
| 60 | Rahmen, Ring, Deckring | 139 | Inertgasaufnahmeraum |
| 70 | Haltevorrichtung | 140 | Außenmuffe |
| 80 | Stempelaufnahme | 145 | Dichtscheibe |
| 90 | Schnellspannsystem | 150 | Schnellwechselsystem |

## Patentansprüche

1. Verfahren zum Formen eines Glasgegenstands (10), insbesondere eines dreidimensional geformten Flachglasgegenstands,
**gekennzeichnet durch** die folgenden Schritte:
a) Anordnen eines Flächengebildes aus Glas (10), beispielsweise einer Flachglasscheibe mit homogener Dicke oder einer Flachglasscheibe mit inhomogener Dicke oder eines vorgeformten Flachglasscheibenrohlings oder flüssigem, flächig verteiltem Glas, zwischen einem Formenstempel (20) und einer Schmelze aus flüssigem Metall (30), insbesondere Zinn;
b) Temperieren von zumindest einem zu formenden Teil des Flächengebildes aus Glas (10) auf eine Umformtemperatur des Glases, bei welcher das Glas eine Viskosität im Bereich von 10 Pas bis 10^{6,5} Pas, vorzugsweise im Bereich von 10 Pas bis 10⁴ Pas und besonders bevorzugt im Bereich von 10 Pas bis 10³ Pas, aufweist;
c) Formen des Flächengebildes aus Glas (10), indem der Formenstempel (20) und eine Oberfläche der Metallschmelze (30), vorzugsweise mittels wenigstens einer Linearbewegung, beispielsweise mittels eines Linearmotors oder Servomotors, aufeinander zu bewegt werden, so dass das Flächengebilde aus Glas (10) entweder einerseits von dem Formenstempel (20) und andererseits von der Metallschmelze (30) mit Druck beaufschlagt und durch die beidseitige Druckbeaufschlagung und/oder durch ein Ansaugen und Anschmiegen des Flächengebildes aus Glas (10) an den Formenstempel (20) geformt wird;
d) Abkühlen des geformten Flächengebildes aus Glas (10) auf eine Handhabungstemperatur unterhalb der Umformtemperatur bei welcher das Glas eine Viskosität von ≥ 10⁷ Pas hat; und
e) Entformen des abgekühlten Flächengebildes (10),
**dadurch gekennzeichnet, dass**
das entformte Flächengebilde (10) im Rahmen einer Nachbehandlung auf beiden Seiten oberflächenkonditioniert wird, indem die zweite oberflächenzukonditionierende Seite, nämlich die Seite des geformten Flachglasgegenstands, die bislang noch nicht mit einem Metallbad in Kontakt gekommen ist, unter Wenden des Flächengebildes (10), mit dem Metallbad (30) oder einem zweiten Metallbad in Kontakt gebracht wird.

2. Verfahren nach Anspruch 1,
**dadurch gekennzeichnet, dass**
das Flächengebilde aus Glas (10) vor Schritt a) auf eine Temperatur vorgewärmt wird, bei welcher das Glas eine Viskosität ≥ 10^{6,5} Pas, bevorzugt ≥ 10⁷ Pas, hat.

3. Verfahren nach Anspruch 1,
**dadurch gekennzeichnet, dass**
das Flächengebilde aus Glas (10) dadurch bereitgestellt wird, dass das Glas in flüssiger Form auf die Metallschmelze (30) oder den Formenstempel (20) gegossen und anschließend auf die Umformtemperatur abgekühlt wird.

4. Verfahren nach einem der vorhergehenden Ansprüche,
**dadurch gekennzeichnet, dass**
das Temperieren des Flächengebildes aus Glas (10) mittels zumindest einer Heizung (40), beispielsweise einer Infrarot (IR)-Heizung und/oder, gegebenenfalls ergänzend, mittels zumindest einer Induktions- und/oder zumindest einer Mikrowellen-Heizung, und/oder durch ein Erwärmen oder Abkühlen der Metallschmelze (30) durchgeführt wird.

5. Verfahren nach einem der vorhergehenden Ansprüche,
**dadurch gekennzeichnet, dass**
das Verfahren unter Sauerstoffausschluss, bevorzugt in einer gegenüber dem Glas, dem flüssigen Metall, insbesondere der Zinnschmelze, und dem Material des Formenstempels inerten Atmosphäre, beispielsweise in einer Edelgasatmosphäre, insbesondere Argonatmosphäre, und/oder Stickstoffatmosphäre und/oder Kohlendioxidatmosphäre durchgeführt wird.

6. Verfahren nach einem der vorhergehenden Ansprüche,
**dadurch gekennzeichnet, dass**
der Entformungsschritt mittels Druckluftbeaufschlagung des geformten Flächengebildes (10), nämlich dreidimensional geformten Flachglasgegenstands (10), durchgeführt wird.

7. Verfahren nach einem der vorhergehenden Ansprüche,
**dadurch gekennzeichnet, dass**
das zweite Metallbad eine geringere Temperatur aufweist, als das während des Formungsschritts c) verwendete Metallbad (30).

8. Vorrichtung zum Herstellen eines Glasgegenstands, insbesondere eines dreidimensional geformten Flachglasgegenstands (10), insbesondere mittels eines Verfahrens gemäß einem der vorhergehenden Ansprüche 1 bis 7, wobei
die Vorrichtung einen zur Aufnahme von schmelzflüssigem Metall, insbesondere Zinn, geeigneten Aufnahmeraum (50) sowie einen dem Aufnahmeraum (50) gegenüberliegenden Formenstempel (20) aufweist, wobei zwischen Aufnahmeraum (50) und Formenstempel (20) ein Formungsraum ausgebildet ist, in welchen ein Flächengebilde aus Glas (10), insbesondere ein Glasrohling oder flüssiges Glas, einbringbar ist und wobei der Formenstempel (20) und die Metallschmelze aufeinander zu bewegbar sind und der Formenstempel (20) gegebenenfalls Öffnungen zum Anlegen von Unterdruck oder Überdruck aufweist, so dass das Flächengebilde aus Glas (10) einerseits von dem Formenstempel (20) und andererseits von der Metallschmelze mit Druck beaufschlagbar und durch die beidseitige Druckbeaufschlagung und/oder durch ein Ansaugen und Anschmiegen des Flächengebildes aus Glas (10) an den Formenstempel (20) formbar ist und der Formenstempel (20) von einem Rahmen (60), insbesondere Ring, wie beispielsweise Deckring, umgeben, insbesondere geführt, ist, wobei der den Formenstempel umgebende Rahmen (60), insbesondere Ring, Öffnungen aufweist, wobei über die Öffnungen an einer Kontaktfläche zwischen dem Flächengebilde aus Glas (10) und dem Formenstempel (20) ein Unterdruck oder ein Überdruck erzeugbar ist.

9. Vorrichtung nach Anspruch 8,
**dadurch gekennzeichnet, dass**
der Aufnahmeraum (50) in Fluidkommunikation mit einem zur Aufnahme von schmelzflüssigem Zinn geeigneten und gegebenenfalls mit Druck beaufschlagbaren Behälter, insbesondere Ausgleichsbehälter, steht.

10. Vorrichtung nach einem der vorhergehenden Ansprüche 8 bis 9,
**dadurch gekennzeichnet, dass**
der Formenstempel (20) aus einem hochtemperaturbeständigen Material, wie beispielsweise einem hochschmelzenden Metall, beispielsweise Stahl, Gold, Kupfer, Ruthenium, Osmium, Zirconium, Hafnium, Niob, Tantal, Chrom, Molybdän oder Wolfram oder einer hochschmelzenden Legierung oder einer bei Temperaturen im Bereich von 700°C bis 1600°C gegenüber Glas inerten Keramik, wie beispielsweise einem Carbid oder Nitrid, hergestellt oder mit einem solchen hochtemperaturbeständigen Material beschichtet ist.

11. Vorrichtung nach einem der vorhergehenden Ansprüche 8 bis 10,
**dadurch gekennzeichnet, dass**
der Formenstempel (20) wenigstens einen Hohlraum, insbesondere wenigstens einen Kanal und/oder eine Leitung, aufweist, der/die mit einem, insbesondere gasförmigen, Heiz- oder Kühlfluid durchströmbar ist.

12. Vorrichtung nach einem der vorhergehenden Ansprüche 8 bis 11,
**dadurch gekennzeichnet, dass**
der Formenstempel (20) zumindest zwei Stempelkomponenten umfasst, wobei vorzugsweise jede Stempelkomponente unabhängig bewegbar ist.

13. Vorrichtung nach einem der vorhergehenden Ansprüche 8 bis 12,
**dadurch gekennzeichnet, dass**
die Vorrichtung wenigstens eine Transportvorrichtung, beispielsweise einen Transportschlitten, aufweist, wobei die wenigstens eine Transportvorrichtung zum Führen einer Haltevorrichtung (70) und/oder einer Tragvorrichtung für das Flächengebilde aus Glas (10), beispielsweise in Form eines Greifers oder einer Lanze, dient, um das Flächengebilde aus Glas (10) in den Formungsraum einzubringen und/oder einen geformten Flachglasgegenstand (10) aus dem Formungsraum zu entnehmen.

## Claims

1. Method for molding a glass item (10), in particular a three-dimensionally molded planar glass item,
**characterized by** the following steps:
a) arranging a planar formation made of glass (10), for example, a planar glass plate having homogeneous thickness or a planar glass plate having inhomogeneous thickness or a pre-molded planar glass plate blank or liquid, flatly distributed glass, between a mold stamp (20) and a melt made of liquid metal (30), in particular tin;
b) bringing the temperature of at least one part of the planar formation made of glass (10) to be molded to a forming temperature of the glass, at which the glass has a viscosity in the range of 10 Pas to 10^{6.5} Pas, preferably in the range of 10 Pas to 10⁴ Pas, and particularly preferably in the range of 10 Pas to 10³ Pas;
c) molding the planar formation made of glass (10) by moving the mold stamp (20) and a surface of the metal melt (30) toward one another, preferably by means of at least one linear movement, for example, by means of a linear motor or servo motor, so that the planar formation made of glass (10) is subjected to pressure either on one side by the mold stamp (20) and on the other side by the metal melt (30) and is molded by the two-sided pressure application and/or by suctioning and clinging of the planar formation made of glass (10) to the mold stamp (20);
d) cooling the molded planar formation made of glass (10) to handling temperature below the forming temperature at which the glass has a viscosity of ≥ 10⁷ Pas; and
e) demolding the cooled planar formation (10),
**characterized in that**
the demolded planar formation (10) is surface-conditioned on both sides in the context of a posttreatment **in that** the second side to be surface-conditioned, namely the side of the molded planar glass item which has not yet come into contact with a metal bath up to this point, with turning of the planar formation (10), is brought into contact with the metal bath (30) or a second metal bath.

2. Method according to claim 1,
**characterized in that**
the planar formation made of glass (10) is preheated before step a) to a temperature at which the glass has a viscosity of ≥ 10^{6.5} Pas, preferably ≥ 10⁷ Pas.

3. Method according to claim 1,
**characterized in that**
the planar formation made of glass (10) is provided **in that** the glass is poured in liquid form onto the metal melt (30) or the mold stamp (20) and then cooled to the forming temperature.

4. Method according to any one of the preceding claims,
**characterized in that**
the planar formation made of glass (10) is brought to temperature by means of at least one heater (40), for example, an infrared (IR) heater and/or, possibly additionally, by means of at least one induction heater and/or at least one microwave heater, and/or by heating or cooling of the metal melt (30).

5. Method according to any one of the preceding claims,
**characterized in that**
the method is carried out under oxygen exclusion, preferably in an atmosphere inert with respect to the glass, the liquid metal, in particular the tin melt, and the material of the mold stamp, for example, in a noble gas atmosphere, in particular an argon atmosphere, and/or a nitrogen atmosphere and/or a carbon dioxide atmosphere.

6. Method according to any one of the preceding claims,
**characterized in that**
the demolding step is carried out by means of application of compressed air to the molded planar formation (10), namely the three-dimensionally molded planar glass item (10).

7. Method according to any one of the preceding claims,
**characterized in that**
the second metal bath has a lower temperature than the metal bath (30) used during molding step c).

8. Device for producing a glass item, in particular a three-dimensionally molded planar glass item (10), in particular by means of a method according to any one of preceding claims 1 to 7, wherein
the device has a receptacle chamber (50) suitable for accommodating molten metal, in particular tin, and a mold stamp (20) opposite the receptacle chamber (50), wherein a molding chamber is formed between receptacle chamber (50) and mold stamp (20), into which a planar formation made of glass (10), in particular a glass blank or liquid glass, can be introduced and wherein the mold stamp (20) and the metal melt are movable toward one another and the mold stamp (20) possibly has openings for applying negative pressure or positive pressure, so that the planar formation made of glass (10) can be subjected to pressure on one side by the mold stamp (20) and on the other side by the metal melt and can be molded by the two-sided pressure application and/or by suctioning and clinging of the planar formation made of glass (10) to the mold stamp (20) and the mold stamp (20) is surrounded, in particular guided, by a frame (60), in particular a ring, such as a cover ring, wherein the frame (60), in particular the ring, surrounding the mold stamp has openings, wherein a negative pressure or a positive pressure can be generated via the openings at a contact surface between the planar formation made of glass (10) and the mold stamp (20).

9. Device according to claim 8,
**characterized in that**
the receptacle chamber (50) is in fluid communication with a container, in particular a compensation container, which is suitable for accommodating molten tin and can possibly be subjected to pressure.

10. Device according to any one of preceding claims 8 to 9,
**characterized in that**
the mold stamp (20) is produced from a high temperature resistant material, such as a high-melting-point metal, for example, steel, gold, copper, ruthenium, osmium, zirconium, hafnium, niobium, tantalum, chromium, molybdenum, or tungsten or a high-melting-point alloy or a ceramic inert to glass at temperatures in the range of 700°C to 1600°C, such as a carbide or nitride, or is coated using such a high temperature resistant material.

11. Device according to any one of preceding claims 8 to 10,
**characterized in that**
the mold stamp (20) has at least one cavity, in particular at least one channel and/or one line, through which a heating fluid or cooling fluid, which is in particular gaseous, can flow.

12. Device according to any one of preceding claims 8 to 11,
**characterized in that**
the mold stamp (20) comprises at least two stamp components, wherein preferably each stamp component is independently movable.

13. Device according to any one of preceding claims 8 to 12,
**characterized in that**
the device has at least one transport device, for example, a transport carriage, wherein the at least one transport device is used to guide a holding device (70) and/or a support device for the planar formation made of glass (10), for example, in the form of a gripper or a lance, in order to introduce the planar formation made of glass (10) into the molding chamber and/or to remove a molded planar glass item (10) from the molding chamber.

## Revendications

1. Procédé pour le formage d'un objet en verre (10), en particulier d'un objet en verre plat mis en forme en trois dimensions, **caractérisé en ce qu'**il comprend les étapes suivantes :
a) disposition d'une structure plane en verre (10), par exemple d'une vitre plate d'épaisseur homogène ou d'une vitre plate d'épaisseur inhomogène ou d'une ébauche de vitre plate préformée ou de verre liquide réparti à plat, entre un poinçon de formage (20) et un bain de fusion de métal liquide (30), en particulier d'étain ;
b) mise à température d'au moins une partie à mettre en forme de la structure plane en verre (10) à une température de déformation du verre à laquelle le verre présente une viscosité comprise entre 10 Pa·s et 10^{6,5} Pa·s, de préférence comprise entre 10 Pa·s et 10⁴ Pa·s et en particulier comprise entre 10 Pa·s et 10³ Pa·s ;
c) formage de la structure plane en verre (10) par le fait que le poinçon de formage (20) et une surface du bain de métal en fusion (30) sont déplacés l'un vers l'autre, de préférence au moyen d'au moins un mouvement linéaire, par exemple au moyen d'un moteur linéaire ou d'un servomoteur, de sorte que la structure plane en verre (10) est soumise à une pression soit, d'une part, par le poinçon de formage (20) et, d'autre part, par le bain de métal en fusion (30) et mise en forme par l'application bilatérale de pression et/ou par une aspiration et un placage de la structure plane en verre (10) sur le poinçon de formage (20) ;
d) refroidissement de la structure plane en verre (10) mise en forme à une température de manipulation inférieure à la température de déformation à laquelle le verre a une viscosité de ≥ 10⁷ Pa·s et
e) démoulage de la structure plane (10) refroidie,
**caractérisé en ce que** la surface de la structure plane (10) démoulée est conditionnée sur les deux faces au cours d'un post-traitement par le fait que la deuxième face dont la surface doit être conditionnée, à savoir la face de l'objet en verre plat mis en forme qui n'était pas encore venue en contact avec un bain métallique, est mise en contact avec le bain métallique (30) ou avec un deuxième bain métallique en retournant la structure plane (10).

2. Procédé selon la revendication 1, **caractérisé en ce que** la structure plane en verre (10) est préchauffée avant l'étape a) à une température à laquelle le verre présente une viscosité ≥ 10^{6,5} Pa·s, de préférence ≥ 10⁷ Pa·s.

3. Procédé selon la revendication 1, **caractérisé en ce que** la structure plane en verre (10) est préparée en coulant le verre sous forme liquide sur le bain de métal en fusion (30) ou le poinçon de formage (20) et en le laissant ensuite refroidir jusqu'à la température de déformation.

4. Procédé selon l'une des revendications précédentes, **caractérisé en ce que** la mise à température de la structure plane en verre (10) est réalisée au moyen d'au moins un chauffage (40), par exemple un chauffage à infrarouges (IR) et/ou, éventuellement en complément, au moyen d'au moins un chauffage à induction et/ou d'au moins un chauffage à micro-ondes, et/ou par un chauffage ou un refroidissement du bain de métal en fusion (30).

5. Procédé selon l'une des revendications précédentes, **caractérisé en ce qu'**il est exécuté sous exclusion d'oxygène, de préférence sous une atmosphère inerte vis-à-vis du verre, du métal liquide, en particulier du bain d'étain en fusion, et du matériau du poinçon de formage, par exemple sous une atmosphère de gaz rare, en particulier une atmosphère d'argon, et/ou une atmosphère d'azote et/ou une atmosphère de dioxyde de carbone.

6. Procédé selon l'une des revendications précédentes, **caractérisé en ce que** l'étape de déformation est exécutée au moyen de l'application d'air comprimé sur la structure plane (10) mise en forme, c'est-à-dire l'objet en verre plat (10) mis en forme en trois dimensions.

7. Procédé selon l'une des revendications précédentes, **caractérisé en ce que** le deuxième bain métallique présente une température plus basse que le bain métallique (30) utilisé pendant l'étape de formage c).

8. Dispositif pour la fabrication d'un objet en verre, en particulier d'un objet en verre plat (10) mis en forme en trois dimensions, en particulier au moyen d'un procédé selon l'une des revendications 1 à 7, lequel dispositif comporte un espace de contenant (50) apte à reçevoir du métal en fusion liquide, en particulier de l'étain, et un poinçon de formage (20) faisant face à l'espace de contenant (50), dans lequel est formé entre l'espace de contenant (50) et le poinçon de formage (20) un espace de formage dans lequel une structure plane en verre (10), en particulier une ébauche en verre ou du verre liquide, peut être introduite et dans lequel le poinçon de formage (20) et le métal en fusion peuvent être déplacés l'un vers l'autre et le poinçon de formage (20) comporte éventuellement des ouvertures pour appliquer une dépression ou une surpression, de sorte que la structure plane en verre (10) peut être soumise à une pression, d'une part, par le poinçon de formage (20) et, d'autre part, par le métal en fusion et peut être mise en forme par l'application de pression sur les deux faces et/ou par une aspiration et en plaquant la structure plane en verre (10) sur le poinçon de formage (20) et le poinçon de formage (20) est entouré, en particulier guidé, par un cadre (60), en particulier un anneau, par exemple un anneau de couverture, le cadre (60), en particulier l'anneau, qui entoure le poinçon de formage comportant des ouvertures par lesquelles une dépression ou une surpression peut être créée sur une surface de contact entre la structure plane en verre (10) et le poinçon de formage (20).

9. Dispositif selon la revendication 8, **caractérisé en ce que** l'espace de contenant (50) est en communication en vue de la circulation de fluide avec un réservoir convenant pour recevoir de l'étain fondu liquide et pouvant éventuellement mis sous pression, en particulier un réservoir égalisateur.

10. Dispositif selon l'une des revendications 8 à 9, **caractérisé en ce que** le poinçon de formage (20) est fabriqué dans un matériau résistant à haute température tel qu'un métal à point de fusion élevé, par exemple de l'acier, de l'or, du cuivre, du ruthénium, de l'osmium, du zirconium, du hafnium, du niobium, du tantale, du chrome, du molybdène ou du tungstène ou un alliage à point de fusion élevé ou une céramique inerte vis-à-vis du verre à des températures comprises entre 700 °C et 1600 °C, par exemple un carbure ou un nitrure, ou revêtu d'un tel matériau résistant à haute température.

11. Dispositif selon l'une des revendications 8 à 10, **caractérisé en ce que** le poinçon de formage (20) comporte au moins une cavité, en particulier au moins un canal et/ou une conduite, qui peut être parcourue par un fluide de chauffage ou de refroidissement, en particulier gazeux.

12. Dispositif selon l'une des revendications 8 à 11, **caractérisé en ce que** le poinçon de formage (20) comprend au moins deux composants de poinçon, chaque composant de poinçon étant de préférence mobile indépendamment.

13. Dispositif selon l'une des revendications 8 à 12, **caractérisé en ce que** le dispositif comporte au moins un dispositif de transport, par exemple un chariot de transport, lequel au moins un dispositif de transport sert à guider un dispositif de maintien (70) et/ou un dispositif porteur pour la structure plane en verre (10), prenant par exemple la forme d'un grappin ou d'une lance, pour introduire la structure plane en verre (10) dans l'espace de formage et/ou retirer un objet en verre plat (10) mis en forme de l'espace de formage.
